# EUROPEAN PATENT APPLICATION

(11) **EP 0 930 767 A2**
(43) Date of publication of application: **21.07.1999**
(21) Application number: 99300230.2
(22) Date of filing: 14.01.1999
(51) Int. Cl.: H04M 3/50

(54) **Information transmitting and receiving apparatus**

(30) Priority: 14.01.1998 JP 553898; 20.03.1998 JP 7281198
(71) Applicant: SONY CORPORATION, Tokyo (JP)
(72) Inventor: Nakatsuyama, Takashi, Shinagawa-ku, Tokyo (JP); Imai, Tsutomu, Shinagawa-ku, Tokyo (JP)
(74) Representative: Ayers, Martyn Lewis Stanley

(57) **Abstract**

An information transmitting and receiving method is disclosed, that comprises the steps of generating intermediate language information as read-out information corresponding to input text information, combining at least the generated intermediate language information and the input text information so as to generate transmission information, transmitting the generated transmission information, receiving the transmission information, separating the received transmission information into at least text information and intermediate language information, displaying the separated text information, and generating voice synthesized information corresponding to the separated intermediate language information and outputting the voice synthesized information.

## Description

The present invention relates to an information transmitting and receiving apparatus, an information transmitting apparatus, an information receiving apparatus and an information transmitting and receiving method. More particularly, the present invention relates to information transmitting and receiving apparatus, information transmitting apparatus, the information receiving apparatus, and the information transmitting and receiving method which is for use in transmitting and receiving text information.

Conventional information services of which voice information is circulated from a server side to a terminal unit side through a communication line are roughly categorized as two types that follow.

As a first type, a printed text of a published document, a sentence as text data, or the like is read out on the server side and converted into a voice signal which is digital voice signal or analog audio signal. The voice signal is transmitted to a terminal unit through a communication line. The terminal unit performs a predetermined audio process for the received voice signal and outputs a voice.

As a second type, a server side transmits text data to a terminal unit through a communication line. In this case, the terminal unit side performs a voice synthesizing process corresponding to the received text data, obtains a voice signal, performs a predetermined audio process, and outputs a voice.

Such an information service (on demand service) that the user can select one of such two types of systems has been developed.

However, such two types of above-described systems have the following problems.

In the first type of which the server side converts text data into a voice signal and transmits it to the terminal unit side, due to a restriction of a transmission rate of a transmission path as a communication line, when the circulation time is shortened, the voice signal should be compressed so as to reduce the data amount thereof.

When the voice signal is compressed, the quality of audio information remarkably deteriorates. Thus, in this case, a voice signal in high quality cannot be circulated to the user on the terminal unit side.

However, to transmit a voice signal in high quality, the voice signal is not compressed. In this case, the circulation time becomes long. This situation is not appropriate for the user.

In the second type of which the server side transmits text data and the terminal unit side performs a voice synthesizing process for the text data and outputs a voice, the costs of hardware and software of the terminal unit side rise.

When text data is analyzed and a voice is synthesized, if non-particular text is handled, the amount of information necessary for a dictionary and syntax used for the process becomes huge. In addition, when a voice output in high quality is required, analyses for intonation and accent become complicated. Thus, the load of the process performed on the terminal unit side remarkably increases.

These factors remarkably restrict the popularity, size reduction, and cost reduction of the terminal unit.

It is therefore an object of the present invention to provide an information transmitting and receiving apparatus which resolves the above-mentioned problem.

It is another object of the present invention to provide an information transmitting apparatus which resolves the above-mentioned problem.

It is further object of the present invention to provide an information receiving apparatus which resolves the above-mentioned problem.

It is still another object of the present invention to provide an information an information transmitting and receiving method which resolves the above-mentioned problem.

According to the present invention, there is provided the information transmitting and receiving apparatus including an intermediate language information generating portion, a transmission information generating portion, transmitting portion, a receiving portion, a signal processing portion, a displaying portion, and an outputting portion. The intermediate language information generating portion generates intermediate language information as read-out information corresponding to supplied text information. The transmitting information generating portion combines at least the text information and the intermediate language information and generates transmission information. The transmitting portion transmits the transmission information generated by the transmission information generating portion. The receiving portion receives the transmission information from the transmitting portion. The signal processing portion separates the transmission information received by the receiving portion into at least the text information and the intermediate language information and generating voice synthesized information corresponding to the separated intermediate language information. The displaying portion displays the text information separated by the signal processing portion. The outputting portion outputs voice corresponding to the voice synthesized information generated by the signal processing portion.

According to the present invention, there is provided an information transmitting apparatus including an intermediate language information generating portion, a transmission information generating portion, a transmitting portion. The intermediate language information generating portion generates intermediate language information in such a manner that supplied text information is read-out information corresponding to supplied text information. The transmission information generating portion combines at least the text information and the intermediate language information so as to generate transmission information. The transmitting portion transmits the transmission information generated by the transmission information generating portion.

According to the present invention, there is provided an information receiving apparatus. The apparatus receives transmission information at least text information and intermediate language information. The apparatus includes a receiving portion, a signal processing portion, a displaying portion, an outputting portion. The receiving portion receives the transmission information. The signal processing portion separates transmission information received by the receiving portion into at least the text information and generating voice synthesized information corresponding to the separated intermediate language information. The displaying portion displays the text information separated by the signal processing portion. The outputting means outputs voice corresponding to the voice synthesized information generated by the signal processing portion.

According to the present invention, there is provided an information transmitting and receiving method. The information transmitting and receiving method generates intermediate language information as read-out information corresponding to supplied text information, combines at least the intermediate language information generated and the supplied text information and generates transmission information, transmits the transmission information generated, receives the transmission information transmitted, separates the transmission information received into at least the text information and the intermediate language information, displays the text information separated, and generates and outputs voice synthesized information corresponding to the intermediate language information separated.

The invention will be further described by way of non-limitative example with reference to the accompanying drawings, in which:-
Fig. 1 is a block diagram showing the structure of an information circulating system according to an embodiment of the present invention;
Fig. 2 is a block diagram showing the structure of a terminal unit according to the embodiment;
Fig. 3 is a flow chart showing a transmission information generating process according to the embodiment;
Fig. 4 is a flow chart showing an intermediate language information converting procedure of a first operation example according to the embodiment;
Figs. 5A to 5E are schematic diagrams for explaining a transmission information generating process of the first operation example according to the embodiment;
Fig. 6 is a schematic diagram for explaining an example of data of transmission information of the first operation example according to the embodiment;
Fig. 7 is a schematic diagram for explaining examples of data of transmission information of the first operation example according to the embodiment of the present invention;
Fig. 8 is a schematic diagram for explaining examples of data of transmission information of the first operation example according to the embodiment;
Fig. 9 is a flow chart showing a reproducing process of received transmission information of the first operation example according to the embodiment;
Fig. 10 is a schematic diagram for explaining delimitation information according to the embodiment;
Fig. 11 is a flow chart showing an intermediate language information converting procedure of a second operation example according to the embodiment;
Figs. 12A to 12E are schematic diagrams for explaining formats of transmission information of the second operation example according to the embodiment;
Fig. 13 is a schematic diagram for explaining examples of data of transmission information of the second operation example according to the embodiment;
Fig. 14 is a schematic diagram for explaining pronunciation symbol information according to the embodiment;
Fig. 15 is a schematic diagram for explaining pronunciation symbol information according to the embodiment of the present invention;
Figs. 16A to 16C are schematic diagrams for explaining intonation/accent data according to the embodiment;
Fig. 17 is a schematic diagram for explaining a real example of intonation/accent data according to the embodiment;
Fig. 18 is a schematic diagram for explaining audio volume data according to the embodiment;
Fig. 19 is a schematic diagram for explaining examples of data of transmission information of the second operation example according to the embodiment;
Figs. 20A to 20F are schematic diagrams for explaining formats of transmission information of the second operation example according to the embodiment;
Fig. 21 is a schematic diagram for explaining s-command according to the embodiment;
Figs. 22A and 22B are schematic diagrams for explaining t-command according to the embodiment;
Fig. 23 is a schematic diagram for explaining v-command according to the embodiment of the present invention;
Fig. 24 is a schematic diagram for explaining examples of data of transmission information of the second operation example according to the embodiment;
Figs. 25A and 25B are flow charts showing a reproducing process of received transmission information of the second operation example according to the embodiment;
Figs. 26A and 26B are flow charts showing the reproducing process for received transmission information of the second operation example according to an embodiment; and
Figs. 27A and 27B are flow charts showing the reproducing process of received transmission information of the second operation example according to the embodiment.

Explained below are information circulating system according to the invention with reference to the drawings.

An embodiments system will be described in the following order.
1. Structure of information circulating system
2. Structure of terminal unit side
3. Transmission information generating operation in authoring system (first operation example)
4. Process on terminal unit side corresponding to first operation example
5. Transmission information generating operation in authoring system (second operation example)
6. Process on terminal unit side corresponding to second operation example

### 1. Structure of information circulating system

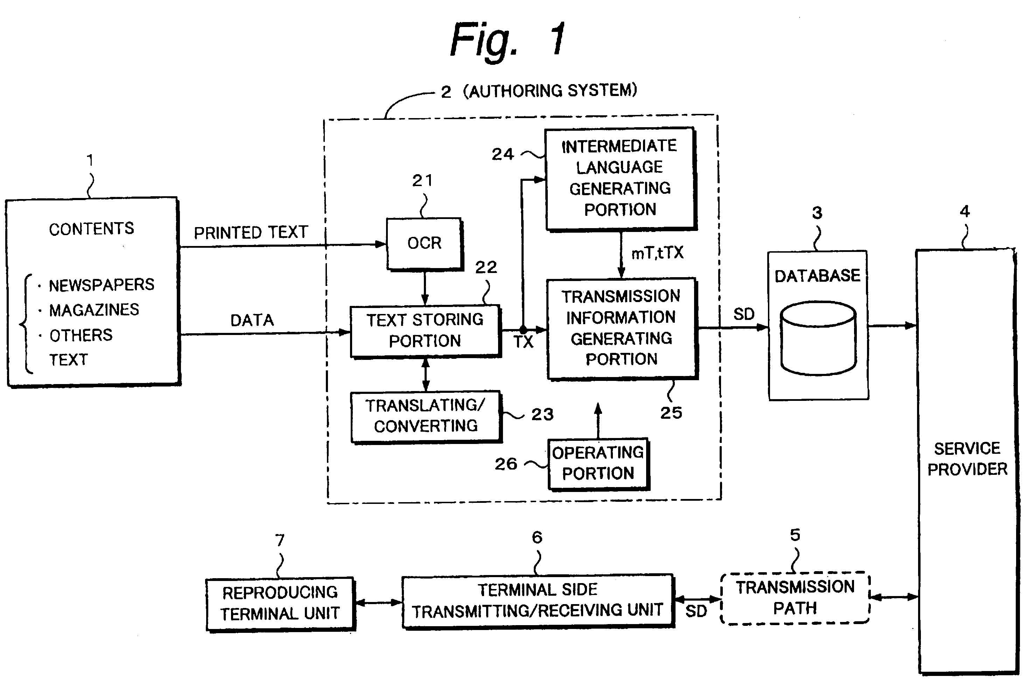

Fig. 1 shows the structure of the information circulating system according to the present invention.

The information circulating system comprises contents 1, an authoring system 2, a database 3, a service provider 4, a transmission path 5, a terminal side transmitting/receiving unit 6, and a reproducing terminal unit 7.

The contents 1 represents various publications and electronic text data as information sources. In other words, the contents 1 are printed texts (such as newspapers, magazines, novels, and so forth) and text data of electronic publications.

The authoring system 2 generates transmission information as service information circulated to the user corresponding to information as printed texts or text data as the contents 1.

The authoring system 2 comprises an OCR (Optical Character Reader) 21, a text storing portion 22, a translating/converting portion 23, an intermediate language generating portion 24, a transmission information generating portion 25, and an operating portion 26.

In the authoring system 2, portions other than the OCR 21 and the operating portion 26 are represented as functional blocks.

In other words, from a point of view of hardware, these functional blocks are composed of an information processing unit (such as a personal computer or a workstation), a data input interface unit, and an operator interface unit. The text storing portion 22, the translating/converting portion 23, the intermediate language generating portion 24, and the transmission information generating portion 25 are composed as processing functions in the personal computer.

As the data input interface unit, an inputting unit that inputs contents as data is disposed along with the OCR 21 (examples of the inputting unit are a CD-ROM drive and a communication terminal unit).

In addition, as the operator interface unit, inputting units such as a keyboard and a mouse (equivalent to the operating portion 26) and a displaying monitor are disposed.

When contents as printed text are supplied, a reading process is performed by the OCR 21. The data that is read by the OCR 21 is converted into text data as electronic data and stored in the text storing portion 22. The number of titles of electronic publications has been increased. However, it is not necessary to convert contents that are supplied as electronic data (such as data of CD-ROMs and contents supplied through a communication line) into text data. Thus, in this case, such contents are directly stored in the text storing portion 22 through a data input interface unit (not shown).

The translating/converting portion 23 translates or converts text data stored in the text storing portion 22 into another language with equivalent meaning. For example, the translating/converting portion 23 translates a character string in Japanese into text data in a foreign language such as English, French, or German. Alternatively, the translating/converting portion 23 converts text data in standard Japanese into text data of a dialect in Tohoku, Osaka, or Kyusyu region of Japan. In addition, the translating/converting portion 23 converts text data in literary style into text data in spoken style.

Text data TX to be circulated to the user (namely, text data supplied as the contents 1 or text data translated or converted by the translating/converting portion 23) is supplied to the intermediate language generating portion 24 and the transmission information generating portion 25. Although processes performed by the intermediate language generating portion 24 and the transmission information generating portion 25 will be described later, in brief, the intermediate language generating portion 24 converts supplied text data TX into intermediate language information mT as read-out information for each character string as conversion text string tTX and supplies the intermediate language information mT to the transmission information generating portion 25.

The transmission information generating portion 25 generates transmission information SD with the supplied text data (or conversion text string tTX) and the intermediate language information mT.

The transmission information SD is stored in the database 3. Thereafter, the transmission information SD is used as service data in the information circulating service.

The service provider 4 performs a connection service for the user to the transmission path 5, a subscriber registering process, a charging process, and so forth.

The user of the information circulating service uses a reproducing terminal unit 7 that is a portable, compact and light unit.

When the user needs information, he or she connects the reproducing terminal unit 7 to the terminal side transmitting/receiving unit 6. The terminal side transmitting/receiving unit 6 may be disposed at a kiosk of a station or a convenience store as a public unit or at the user's house so that the user can connect the reproducing terminal unit 7 to the terminal side transmitting/receiving unit 6.

In any case, the terminal side transmitting/receiving unit 7 is connected to the transmission path 5 as a public telephone line such as an ISDN (Integrated Service Digital Network) line or a dedicated communication line for the information circulating service. Alternatively, part or all of the transmission path 5 is not limited to a wired line, but a wireless communication line.

The reproducing terminal unit 7 and the terminal side transmitting/receiving unit 6 are connected through their connectors. Alternatively, they may be connected through a cable or a wireless connecting means using for example infrared rays or waves.

The user requests the database 3 for desired information through the terminal side transmitting/receiving unit 6 and the service provider 4. Thus, relevant information which is requested by the user (namely, transmission information generated by the authoring system 2) is read from the database 3. The transmission information read from the database 3 is transmitted to the terminal side transmitting/receiving unit 6 through the transmission path 5.

The transmission information received by the terminal side transmitting/receiving unit 6 (namely, service information requested by the user) is output as a voice and an image on the reproducing terminal unit 7 connected thereto.

### 2. Structure of terminal unit side

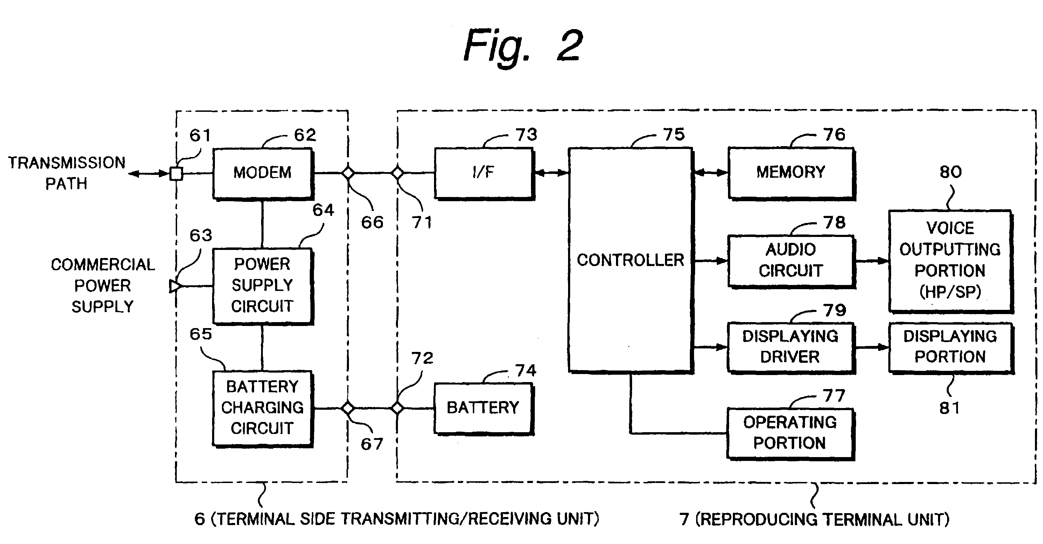

Fig. 2 shows the structures of the terminal side transmitting/receiving unit 6 and the reproducing terminal unit 7.

In the terminal side transmitting/receiving unit 6, a terminal 61 of a modem 62 is connected to the transmission path 5 so as to be able to communicate with the service provider 4.

In this example as shown in Fig. 2, the terminal side transmitting/receiving unit 6 is connected to a commercial power supply with a power supply terminal (power plug) 63. For example, a power supplying circuit 64 performs a rectifying and smoothing process and outputs an operation power voltage. In addition, a power charging circuit 65 that charges electricity to a battery 74 of the reproducing terminal unit 7 is disposed.

When the terminal side transmitting/receiving unit 6 and the reproducing terminal unit 7 are connected, a terminal 67 and a terminal 72 are connected. The battery charging circuit 65 can supply a charging current to the battery 74.

Consequently, the reproducing terminal unit 7 obtains the operation power voltage from the battery 74. In addition, when the reproducing terminal unit 7 is connected to the terminal side transmitting/receiving unit 6, the operation power voltage is charged to the battery 74.

When the terminal side transmitting/receiving unit 6 and the reproducing terminal unit 7 are connected, a terminal 66 of the modem 62 and a terminal 71 of an interface portion 73 are connected. Transmission information received from the service provider 4 through the transmission path 5 is supplied to a controller 75 through the modem 62 and the interface portion 73 of the reproducing terminal unit 7. The transmission information of the user is transmitted to the service provider 4 through the interface 73 and the modem 62.

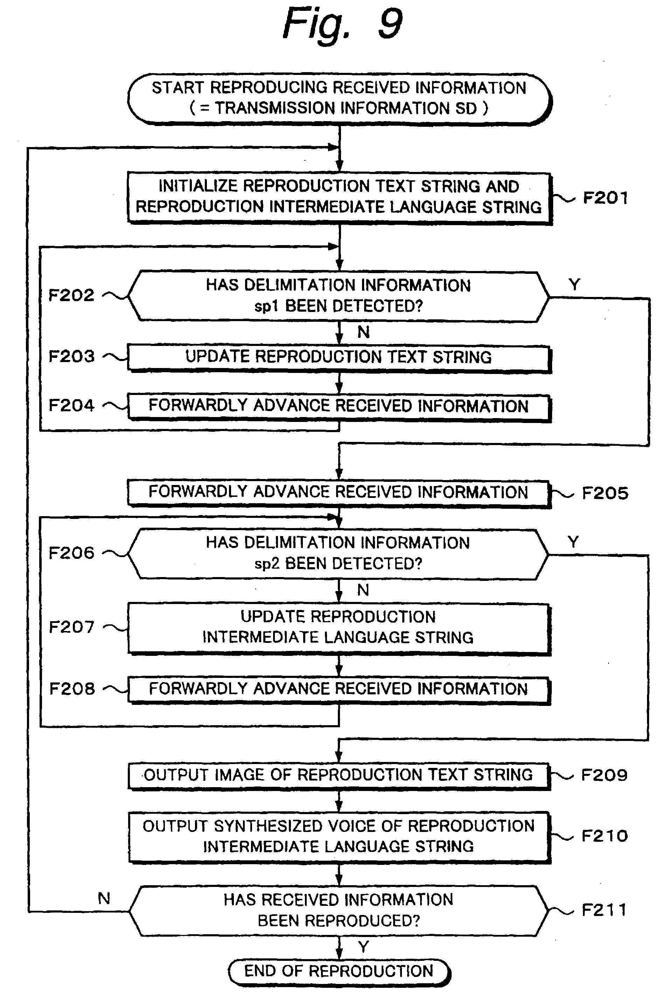

The controller 75 is composed of a so-called microcomputer. The controller 75 controls the operation of each portion of the reproducing terminal unit 7, monitors the user's operation on the operating portion 77, and performs information processes necessary for outputting a voice and an image of the transmission information. The information processes necessary for outputting a voice and an image are for example a process for separating text data and intermediate language information from transmission information, a process for synthesizing a voice corresponding to intermediate language information, and so forth (these processes will be described later with reference to Fig. 9).

The controller 75 executes required processes with a memory 76. The memory 76 is composed of a ROM or a RAM that stores an operation program, parameters necessary for various processes, and information necessary for the voice synthesizing process, a RAM for storing transmission information, a RAM for a working area, and so forth.

As a voice outputting system, the reproducing terminal unit 7 has an audio circuit 78 and a voice outputting portion 80. The controller 75 causes intermediate language information to be separated form transmission information. Synthesized voice information (voice signal) generated by the voice synthesizing process is supplied to the audio circuit 78. The audio circuit 78 performs a D/A converting process, an equalizing process, an amplifying process, and so forth for the voice signal and supplies the resultant voice signal to the voice outputting portion 80. The voice outputting portion 80 is composed of a speaker SP, a headphone HP and so on. The voice outputting portion 80 outputs a voice corresponding to synthesized voice information to the user. In other words, the user can hear a voice as service information (transmission information) circulated from the service provider 4.

As a display outputting system, the reproducing terminal unit 7 has a displaying driver 79 and a displaying portion 81. After the controller 75 causes text data to be separated from transmission information, the separated text data is supplied to the displaying driver 79. The displaying driver 79 drives the displaying portion 81 corresponding to text data so as to display text data. The displaying portion 81 is composed of for example a liquid crystal panel or a CRT. When the displaying portion 81 displays text data, the user can see the contents of the text data from display contents in addition to hearing a voice that is output from the voice outputting portion 80.

The operating portion 77 has many keys with which the user performs various operations. With these keys, the user can request the service provider 4 for desired information and cause the controller 75 to synthesize a voice of the received information and to display text data thereof. In other words, the controller 75 performs various processes corresponding to user's operations on the operating portion 77.

### 3. Transmission information generating operation in authoring system (first operation example)

Next, a process for generating transmission information (performed by the authoring system 2) and a process for outputting a voice and an image (performed by the reproducing terminal unit 7) in the system shown in Figs. 1 and 2 will be described.

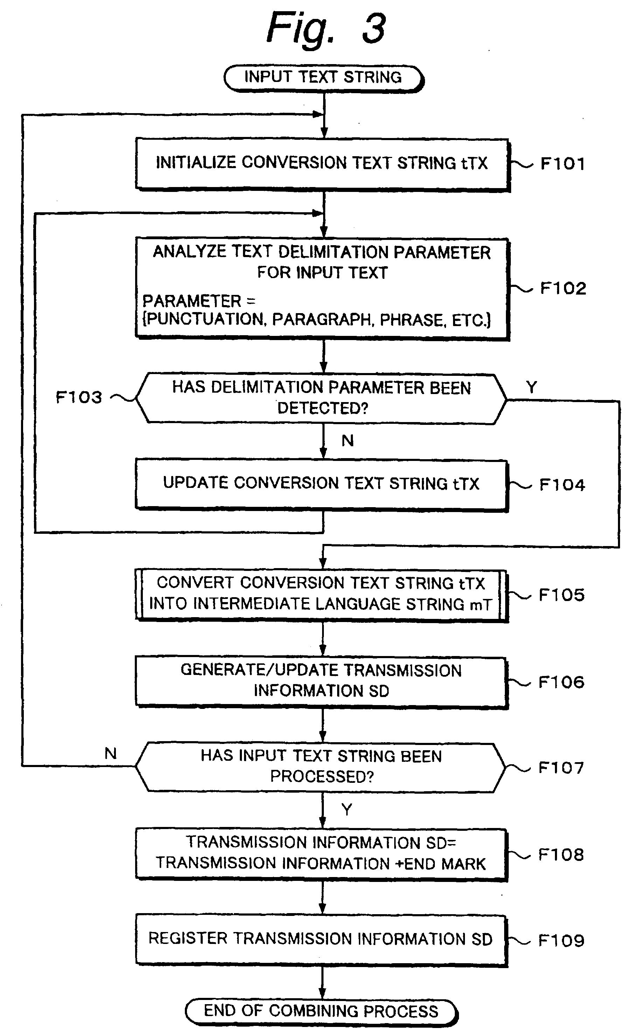

With reference to Figs. 3, 4, and 5, a first operation example as the process for generating the transmission information performed by the authoring system 2 will be described.

In the authoring system 2, text data TX stored in the text storing portion 22 is supplied to the intermediate language generating portion 24. The intermediate language generating portion 24 generates intermediate language information mT. With the generated intermediate language information mT and the text data TX (conversion text string tTX that will be described with reference to Fig. 3), the transmission information generating portion 25 generates transmission information SD.

Fig. 3 shows the processes performed by the intermediate language generating portion 24 and the transmission information generating portion 25.

When the text data TX to be converted into the intermediate language information mT is input to the intermediate language generating portion 24, the authoring system 2 starts the process shown in Fig. 3 from step F101.

At step F101, the intermediate language generating portion 24 initializes data stored as conversion text string tTX (register data to be processed).

At steps F102, F103, and F104, the authoring system 2 analyzes the input text string (text data TX) for example character by character so as to detect text delimitation parameters.

Delimitation parameters are information that represents such as punctuation, a paragraph, and a phrase. In other words, a delimitation parameter is information that represents one sentence unit.

Delimitation of a text as punctuation, a paragraph, or a phrase (in other words, a delimitation parameter) may be set corresponding to an operator's command on the controlling portion 26.

At step F102, the authoring system 2 analyzes the input text string character by character. At step F104, the authoring system 2 performs a process for adding non-delimiter data (characters) to the conversion text string tTX.

When the authoring system 2 has detected a punctuation parameter, the flow advances from step F103 to step F105. At this point, the conversion text string tTX has a text string that is equivalent to a sentence, a phrase, a word, or the like delimited with the delimitation parameter.

At step F105, when the delimitation parameter is detected the authoring system 2 performs a process for converting information as the conversion text string tTX into the intermediate language string mT.

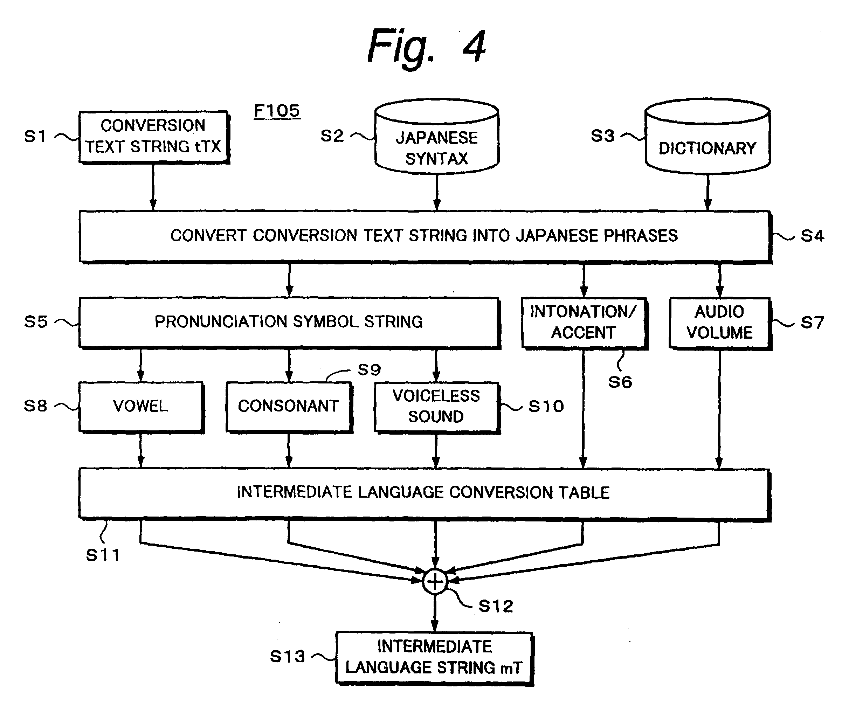

Fig. 4 shows the converting process at step F105.

After reading the conversion text string tTX, the flow advances to step S4. At step S4, the authoring system 2 converts it into Japanese phrases with Japanese syntax information (at step S2) and dictionary information (at step S3). Examples of the dictionary information are a pronunciation symbol dictionary and a phoneme dictionary.

In Japanese phrase converting process, the authoring system 2 generates information as a pronunciation symbol string (at step S5) and information as intonation (rhythm)/accent data (at step S6). The intermediate language generating portion 24 generates audio volume data (at step S7).

The authoring system 2 categorizes information of the pronunciation symbol string as vowels, consonants, and voiceless sounds (at steps S8, S9, and S10).

The authoring system 2 processes the information of vowels, consonants, voiceless sounds, intonation/accent data, and audio volume data with an intermediate language conversion table (at step S11). Thereafter, the authoring system 2 combines the resultant information (at step S12) and forms information as intermediate language information mT (at step S13).

The intermediate language information mT generated at step F105 is supplied to the transmission information generating portion 25. The transmission information generating portion 25 generates a conversion text string tTX and transmission information SD (at step F106).

At step F106, the authoring system 2 combines the intermediate language information mT and the conversion text string tTX as a data string in such a manner the intermediate language information mT and the conversion text string tTX are delimited with delimitation information (sp1 and sp2).

After generating the transmission information SD at step F106 for the intermediate language information mT obtained at step F105, the authoring system 2 determines whether or not the processes for generating the intermediate language information and the transmission information have been completed for all data elements of the input text string. When the determined result is No, the flow returns to step F101. At step F101, the authoring system 2 initializes the conversion text string tTX and repeats the above-described processes.

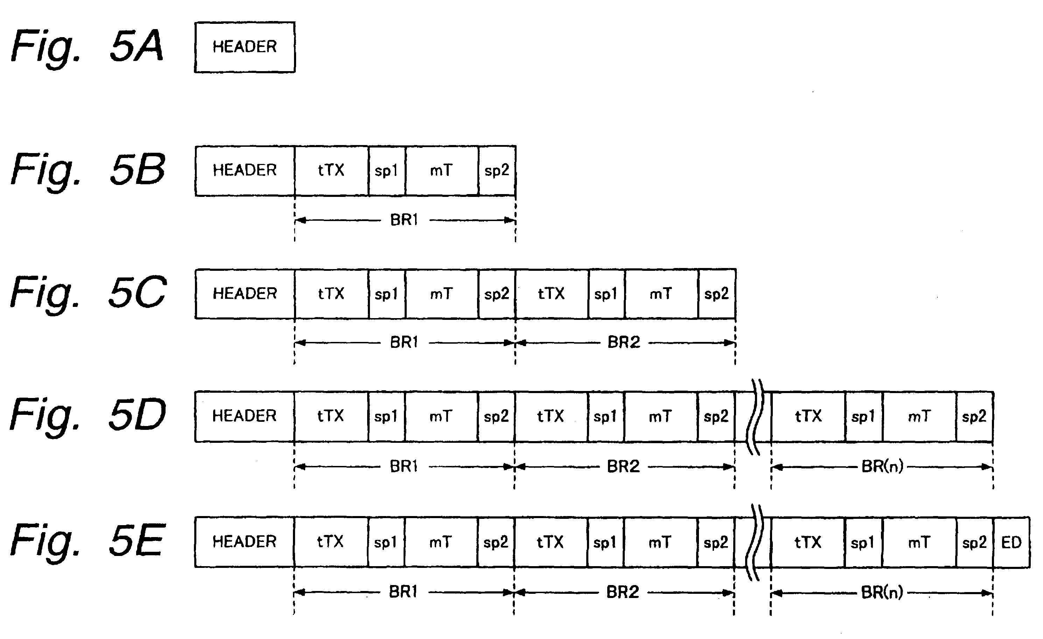

At steps F101 to F107, the authoring system 2 generates the transmission information SD in the formats shown in Figs. 5A to 5E.

With header data as transmission information SD shown in Fig. 5A, the authoring system 2 generates intermediate language information mT at step F105. At step F106, the authoring system 2 generates transmission information SD as shown in Fig. 5B.

In other words, the authoring system 2 generates the header, a text data portion as the conversion text string tTX, and data as delimitation information sp1, intermediate language information mT, and delimitation information sp2. Thus, the intermediate language information mT and the text data portion tTX corresponding to the intermediate language information mT are delimited with delimitation information sp1 and sp2, and grouped as information of one block (block BR1).

The delimitation information sp1 represents a delimitation position for delimiting the text data portion tTX and the intermediate language information mT. The delimitation information sp2 is information that represents the end position of one unit of the intermediate language information mT.

Thereafter, the authoring system 2 repeats the processes from steps F101 to F107. Thus, as shown in Figs. 5C and 5D, the authoring system 2 updates a data string as the transmission information SD at step F106. In other words, the authoring system 2 adds data as a block of the conversion text string tTX and the intermediate language information mT (blocks BR2 to BR(n)).

When the authoring system 2 has completed the above-described processes for all data elements of the input text string to be generated as one unit of the transmission information SD, the flow advances from step F107 to step F108. For example, the authoring system 2 adds an end mark ED as shown in Fig. 5E the transmission information SD formed as shown in Fig. 5D. In other words, one unit of transmission information SD is completed.

Management data such as data length is added as header data of transmission information SD at step F108. This is because, at step F108, the contents of data have been settled.

After one unit of transmission information SD has been completed at step F108, the flow advances to step F109. At step F109, the authoring system 25 stores the transmission information SD completed to the database 3.

Thus, one unit of transmission information SD that is circulated to the user has been formed.

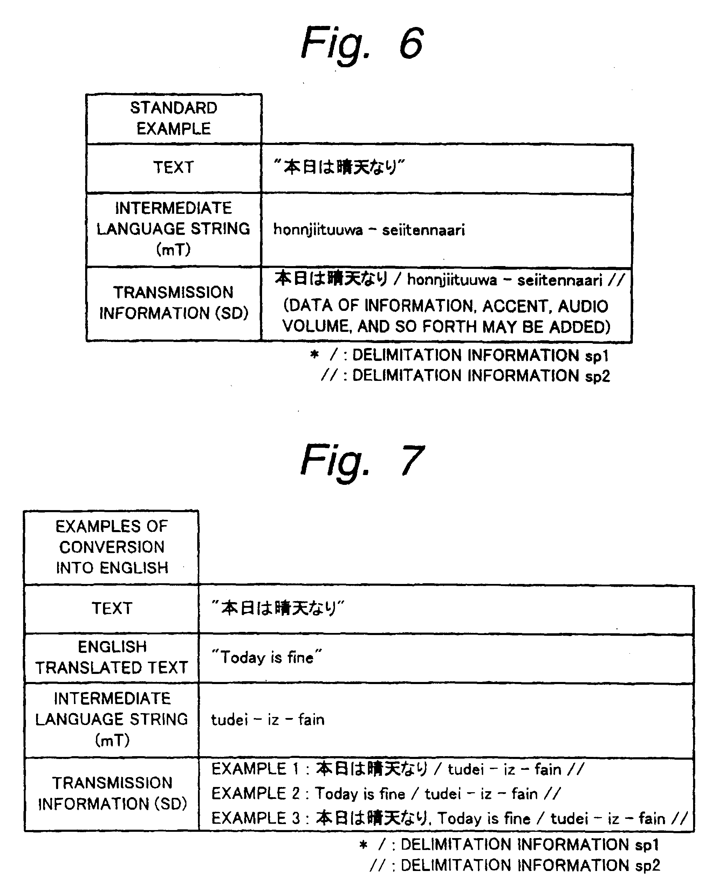

There are various examples of data as the transmission information SD. Next, with reference to Figs. 6 to 8, the transmission information SD will be exemplified.

Fig. 6 shows an example of which transmission information SD is generated with text data " 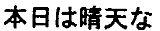 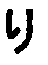 (meaning that today is fine in Japanese)".

In this case, as shown in Fig. 6, data as a pronunciation symbol string "honnjiituuwa-seiitennaari" is generated as intermediate language information mT. "/" (slant) as the above-described delimitation information sp1 and "//" (double-slant) as the delimitation information sp2 are added to the intermediate language information mT and the text data. Thus, the transmission information SD as shown in Fig. 6 is formed. In examples of the transmission information SD shown in Figs. 6 to 8, only one block (BR) of the transmission information SD shown in Fig. 5 is shown. In these examples, a header and an end mark are omitted.

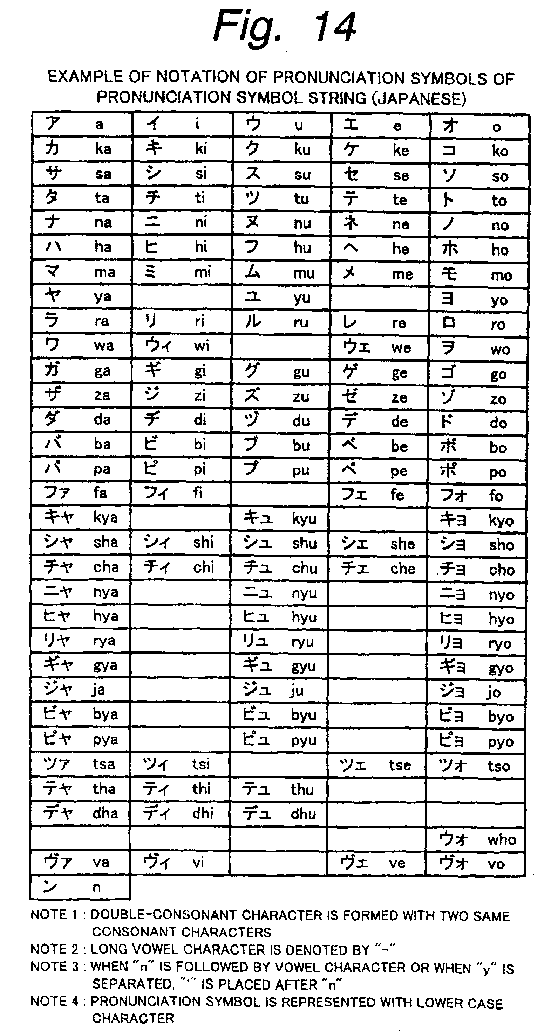

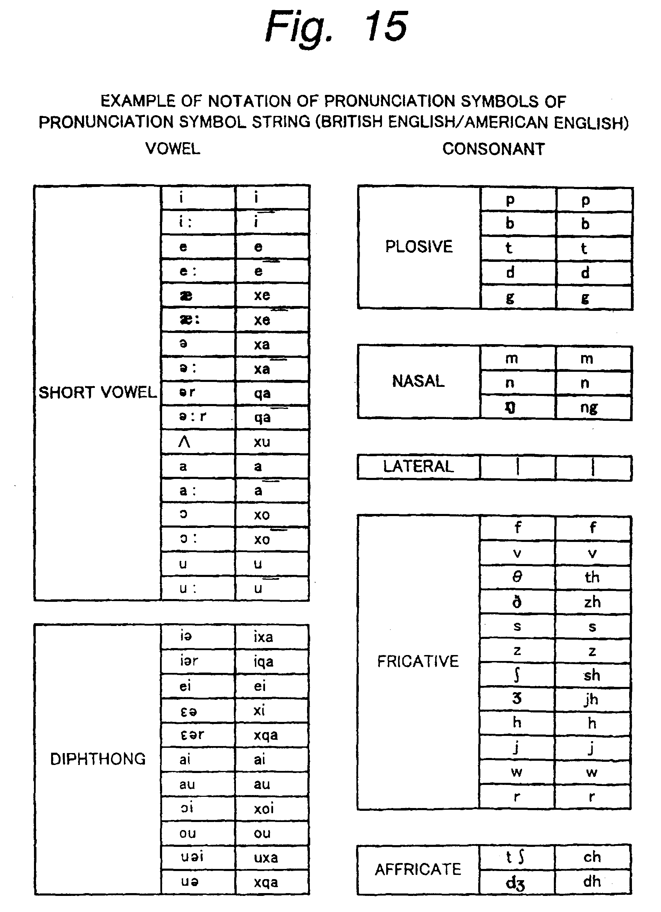

An example of the notation of data of a pronunciation symbol string will be described in a second operation example shown in Figs. 14 and 15.

Figs. 6 to 8 show the simplest examples. However, when text data is composed of many sentences, phrases, words, or the like, many blocks composed of text data, delimitation information sp1, intermediate language information mT, and delimitation information sp2 are formed in succession.

As intermediate language information mT, since various types of information as read-out information such as intonation, accent, and audio volume are added in addition to information as a pronunciation symbol string, the reproducing terminal unit 7 can perform a more sophisticatedly voice synthesizing operation.

Fig. 7 shows examples of which intermediate language information mT that is read-out information in English is generated with text data in Japanese and thereby transmission information SD is formed.

For example, the above-described translating/converting portion 23 converts text data " 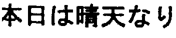 " into translated data "today is fine". The translated data is processed by the authoring system 24. Thus, data of a pronunciation symbol string "tudei-iz-fain" as shown in Fig. 7 is generated as the intermediate language information mT. With the intermediate language information mT, the original Japanese text data, the delimitation information sp1, and the delimitation information sp2, transmission information SD as example 1 shown in Fig. 7 is formed.

Alternatively, as example 2 shown in Fig. 7, with translated text data "today is fine" and intermediate language information mT as the pronunciation symbol string "tudei-iz-fain", transmission information SD may be formed. Moreover, as example 3, with Japanese text data, English text data, and intermediate language information mT as a pronunciation symbol string "tudei-iz-fain", transmission information SD may be formed. Other various examples are also available.

When intermediate language information mT as read-out information converted into a foreign language such as English is used, information of such as intonation, accent, audio volume may be added.

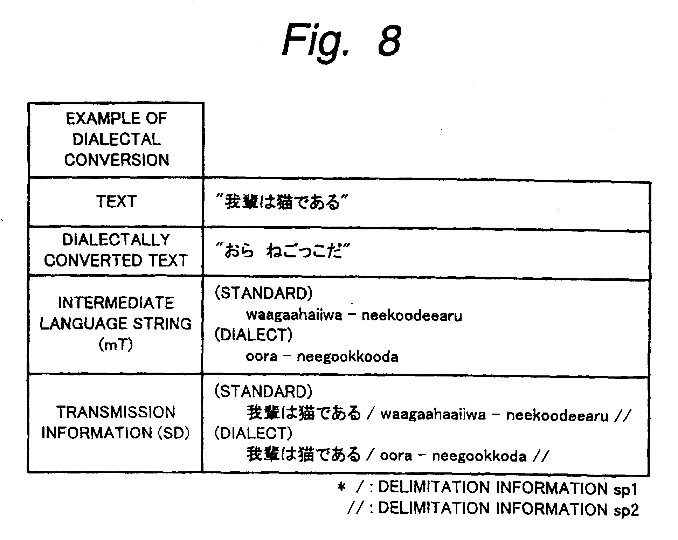

Fig. 8 shows an example of which intermediate language information mT that is read-out information as a dialect is generated with text data of standard Japanese and thereby transmission information SD is formed.

For example, the translating/converting portion 23 converts text data " 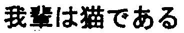 (I am a cat) into dialectical data as shown in Fig. 8. The resultant dialectal data is processed by the authoring system 24. The authoring system 24 generates a pronunciation symbol string "oora-neegookkooda" that is dialectal read-out information as the intermediate language information mT. With the dialectal intermediate language information mT, the original text data, the delimitation information sp1, the delimitation information sp2, dialectal transmission information SD as shown in Fig. 8 is formed.

In this case, when information of such as intonation, accent, and audio volume is added, a dialectal voice can be reproduced more realistically.

Besides the above-described examples, various types of contents of transmission information SD can be considered. The transmission information SD may be set corresponding to a service type, a user's request, a service area, and so forth and may be selected by the user.

### 4. Process on terminal unit side corresponding to first operation example

Next, when the user loads transmission information SD stored in the database 3 to the reproducing terminal unit 7, the reproducing terminal unit 7 performs the following processes.

As described above, the controller 75 of the reproducing terminal unit 7 can read transmission information SD through the terminal side transmitting/receiving unit 6.

When the user inputs a command for reproducing the received information (= transmission information SD) to the reproducing terminal unit 7, the controller 75 performs processes starting from step F201 shown in Fig. 9.

At step F201, the controller 75 initializes a reproduction text string and a reproduction intermediate language string as data strings (registers) to be reproduced.

At steps F202, F203, and F204, the controller 75 separates text data from the transmission information SD and generates a reproduction text string for reproducing text data as image data.

In other words, the controller 75 successively analyzes each data element of the transmission information SD and detects delimitation information sp1. When the current data element is not the delimitation information sp1, the flow advances to step F203. At step F203, the controller 75 updates the reproduction text string in such a manner that the data element (character) which is not the delimitation information sp1 is added to the reproduction text string. At step F204, the controller 75 forwardly advances the transmission information SD. The flow advances to step F202. At step F202, the controller 75 determines whether or not the current data element is the delimitation information sp1.

When the controller 75 has detected the delimitation information sp1, as is clear from the data formats of the transmission information SD shown in Figs. 5A to 5E, the text data (tTX) as one sentence is stored as a reproduction text string.

At step F205, the controller 75 forwardly advances the transmission information SD as the received information. At steps F206, F207, and F208, the controller 75 separates intermediate language information mT from the transmission information SD and generates a reproduction intermediate language string for reproducing the intermediate language information mT (as voice data).

In other words, the controller 75 successively analyzes each data element of the transmission information SD and detects delimitation information sp2. When the current data element is not the delimitation information sp2, the controller 75 updates the reproduction intermediate language string in such a manner that the current data element which is not delimitation information is added to the reproduction intermediate language string at step F207. At step F208, the controller 75 forwardly advances the transmission information SD. At step F206, the controller 75 determines whether or not the current data element is the delimitation information sp2.

When the controller 75 has detected the delimitation information sp2, a data string of intermediate language information mT as read-out information corresponding to text data as one sentence stored as the above-described reproduction text string is stored as a reproduction intermediate language string.

In other words, the text data tTX and the intermediate language information mt are obtained as one block shown in Fig. 5.

Thereafter, the flow advances to steps F209 and F210. The controller 75 supplies data stored as the reproduction text string to the displaying driver 79. The displaying driver 79 causes the displaying portion to display the reproduction text string. In addition, the controller 75 performs a voice synthesizing process for the read-out information stored as the reproduction intermediate language string and generates a synthesized voice signal. The controller 75 supplies the synthesized voice signal generated to the audio circuit 78. The audio circuit 78 causes the voice outputting portion 80 to reproduce and output a voice.

In the processes from steps F201 to F210, the controller 75 outputs a voice and an image as one sentence of the received transmission information SD.

Thus, at step F211, the controller 75 determines whether or not all data elements (all blocks) of the received transmission information SD have been reproduced. In other words, when all data elements (all blocks) as received transmission information SD have not been reproduced, the flow returns to step F201. At step F201, the controller 75 repeats the above-described processes. In other words, the controller 75 reproduces and outputs a sentence, a phrase, or the like as the next block.

After the controller 75 has reproduced all blocks of the received transmission information, the controller 75 completes the reproducing process.

In the above-described processes, the controller 75 reproduces the circulated original text data as a voice and an image corresponding to the received transmission information SD.

In this case, as shown in Fig. 9, one sentence as text data and one data string as intermediate language information mT corresponding to the one sentence as text data are reproduced at a time. In addition, each block of the transmission information SD is reproduced. Thus, since an image and a voice are synchronously reproduced, while listening to the voice the user can see the contents corresponding to the voice on the display portion.

Thus, the controller 75 only performs the voice synthesizing process corresponding to the intermediate language information mT as read-out information and outputs the resultant voice signal. In other words, since the authoring system 2 has performed the text data analyzing process that requires a huge dictionary and syntax data, the controller 75 does not need such a complicated process. Thus, since the load of processes performed by the reproducing terminal unit 7 is small, it can be operated with small scales of hardware and software.

Consequently, small-light structure, low cost, and low power consumption can be easily accomplished for the reproducing terminal unit 7.

In addition, since the controller 75 performs a process for reproducing each block of the received transmission information SD and a process for separating the text data tTX form the intermediate language information mT corresponding to the delimitation information sp1 and sp2, the separating process of the controller 75 is simplified. Thus, the load reduction of processes and the scale reduction of hardware and software can be accomplished for the reproducing terminal unit 7.

In addition, since a transmission voice signal has not been compressed, the voice quality does not deteriorate by compressing process of voice signal data. Moreover, since information of accent, intonation, and so forth is added to transmission data, a voice can be reproduced and output in very high quality.

Furthermore, since the data amount of transmission information SD transmitted through the transmission path 5 is much smaller than that of audio data, the transmission information SD can be quickly transmitted. Thus, the user is provided with a comfortable information service.

### 5. Transmission information generating operation in authoring system (second operation example)

In the above-described first operation example, the transmission information SD is composed of text data tTX, intermediate language information mT, and delimitation information sp1 and sp2. In the second operation example, many types of sophisticated intermediate language information are used.

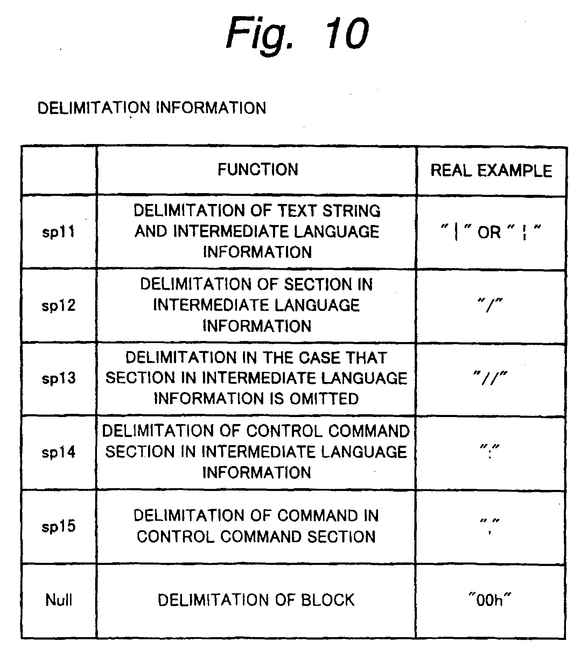

With reference to Fig. 10, delimitation information used in the second operation example will be described.

In this case, as will be described with reference to Fig. 10, delimitation information sp11, sp12, sp13, sp14, and sp15 are used.

The delimitation information sp11 is a code that represents delimitation of a text string and intermediate language information in a block of transmission information SD. As a real example of the delimitation information sp11, "|" as ASCII code "7C" is assigned.

The delimitation information sp12 is a code that represents delimitation of a section in intermediate language information. A "section" represents one information element as read-out information in the intermediate language information. In this embodiment, read-out information is categorized as three types of information that are a pronunciation symbol string, intonation/accent data, and audio volume data. The data duration of each of a pronunciation symbol string, intonation/accent data, and audio volume data is referred to as one section (see section SC in Fig. 12A to 12E).

As a practical example of the delimitation information sp12 , "/" is assigned.

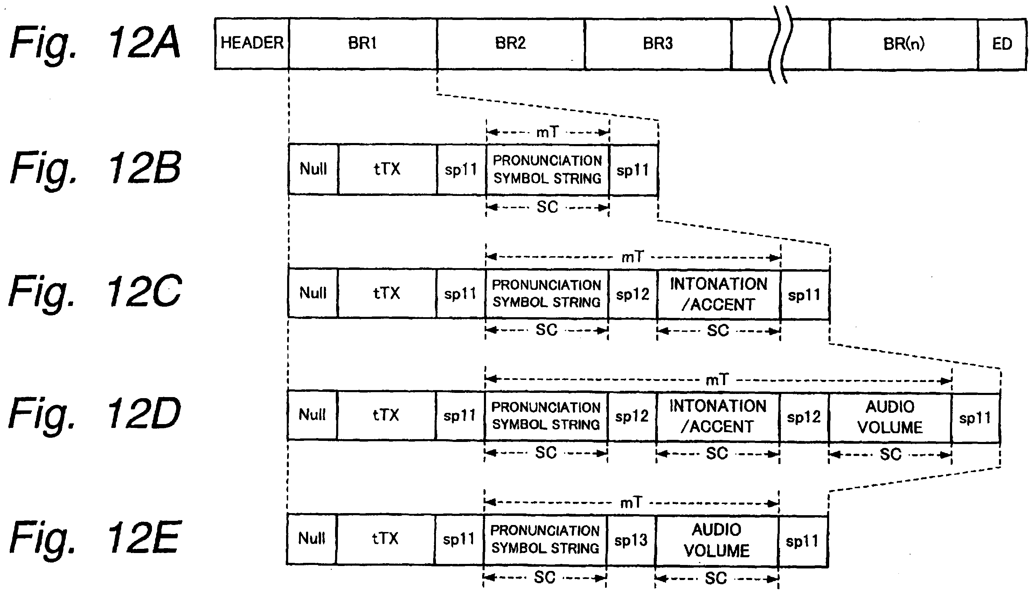

The delimitation information sp13 is a code that represents delimitation of a section in intermediate language information as with the delimitation information sp12. The delimitation information sp13 represents a delimitation position in the case that a particular section is omitted. The delimitation information sp13 will be described later with reference to Fig. 12.

As a real example of the delimitation information sp13, "//" is assigned.

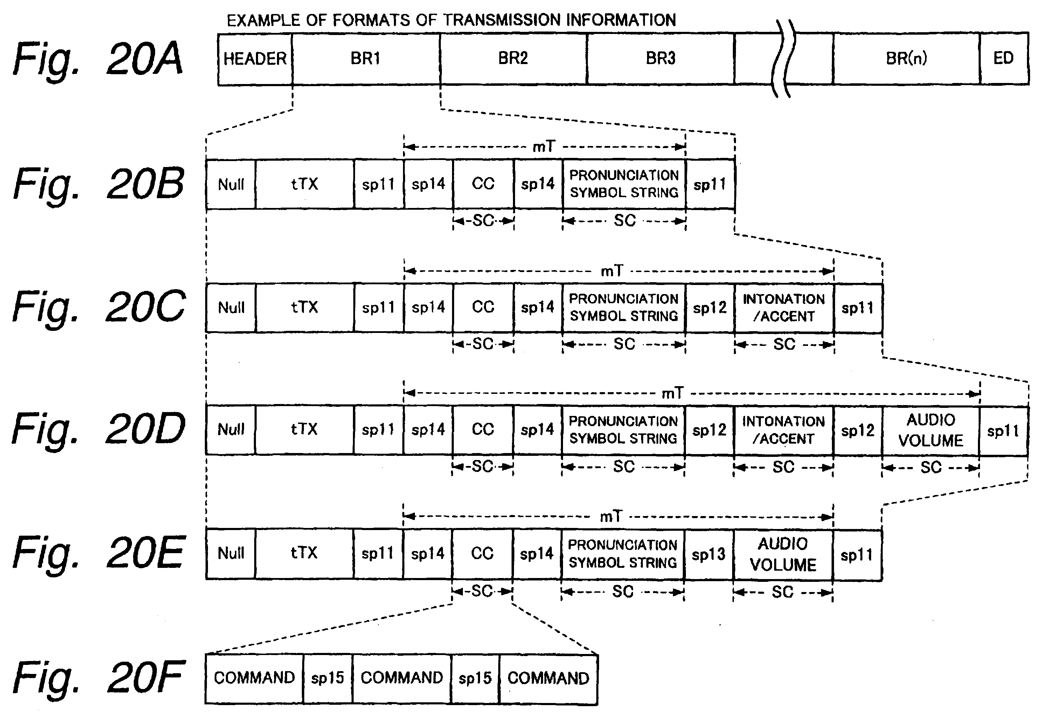

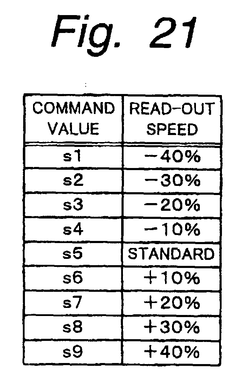

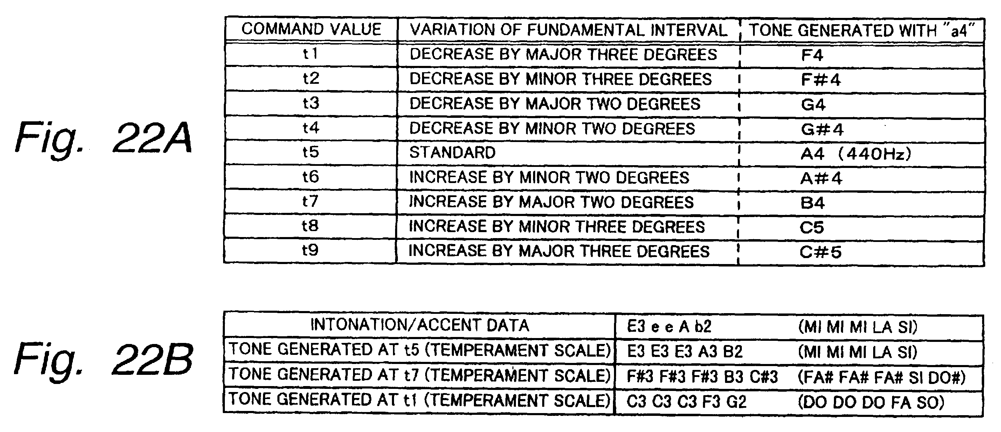

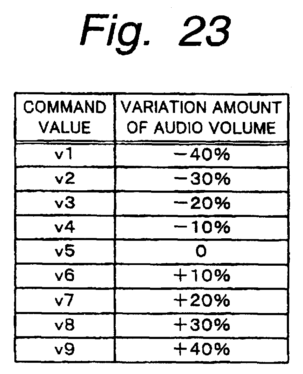

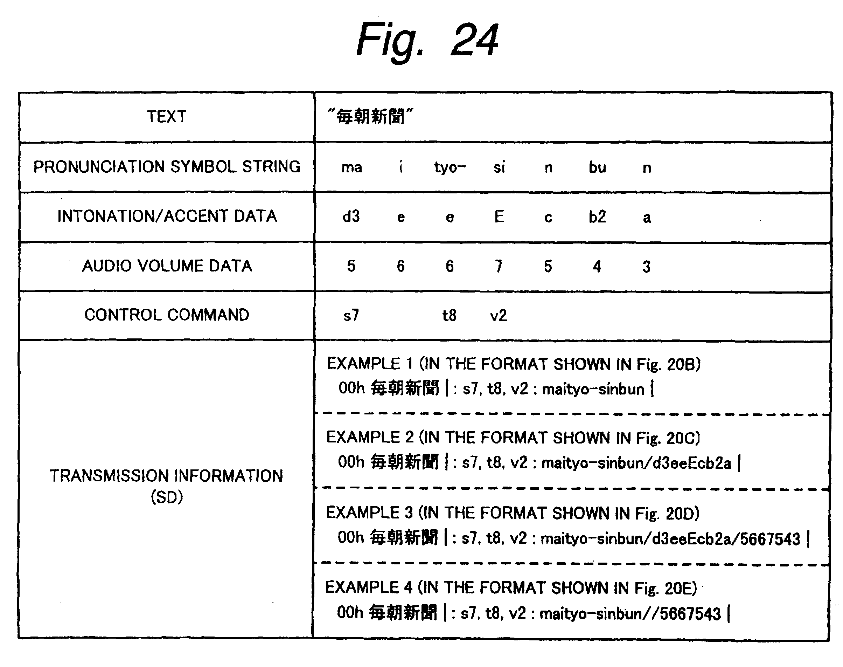

The delimitation information sp14 is a code that represents delimitation of a section of a control command in intermediate language information. A control command represents command information that causes a voice synthesizing process for a pronunciation symbol string of pronunciation information to be set in various manners. The delimitation information sp14 will be described later with reference to Figs. 20 to 23.

As a real example of the delimitation information sp14, ":" is assigned.

The delimitation information sp15 is a code that represents delimitation of each command in a control command section. In this example, s-command, t-command, and v-command are available. The delimitation information sp15 represents delimitation of each of these commands as will be described later.

As a real example of the delimitation information sp15, "," is assigned.

A null code of one byte (namely, "00000000" hereinafter denoted by "00h" in hexadecimal notation) is a code placed at the beginning of each block of transmission information SD. When the null code is considered as one type of delimitation information, it represents delimitation of a block.

The transmission information SD is formed with these types of delimitation information sp11 to spl5. However, the process for generating the transmission information SD performed by the intermediate language generating portion 24 and the transmission information generating portion 25 in the authoring system 2 are almost the same as those in the processes of the above-described first operation example shown in Fig. 3.

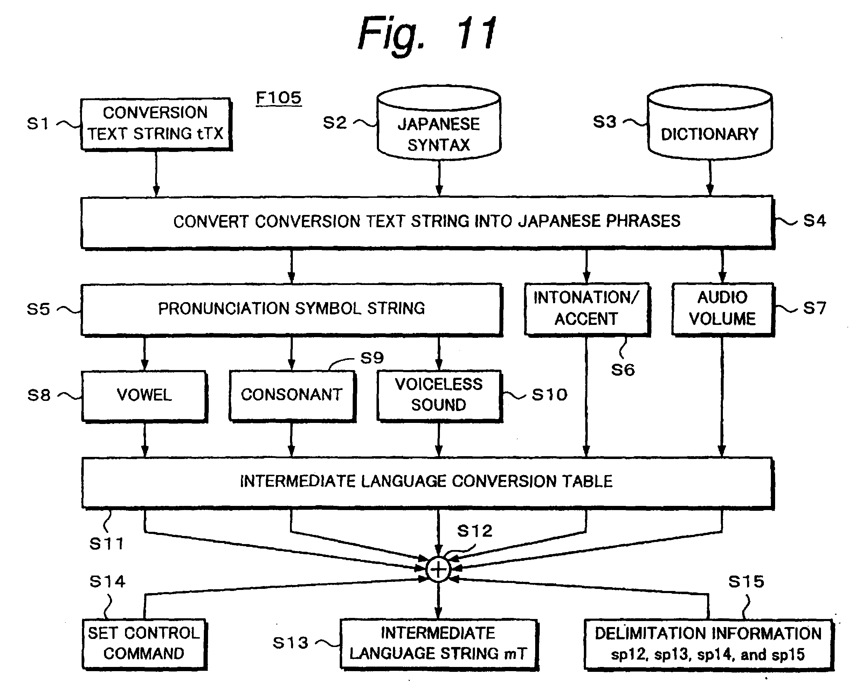

The processes at step F105 shown in Fig. 3 (namely, the process for generating the intermediate language information mT performed by the intermediate information generating portion 24) are performed in the processes shown in Fig. 11. The process for generating transmission information performed by the transmission information generating portion 25 at step F106 shown in Fig. 11 (the second operation example) is different from that shown in Fig. 3 (first operation example) in that the process is performed with the delimitation information sp11 and null code rather than the delimitation information sp1 and sp2.

Next, with reference to Fig. 11, a process for generating intermediate language information mT in the case of the second operation example will be described. This process is performed at step F105 shown in Fig. 3.

As described in the first operation example, at steps F101 to F104 shown in Fig. 3, a text string as one sentence, phrase, word, or the like is stored as a conversion text string tTX. When the conversion text string tTX is converted into an intermediate language string mT, at step S1 shown in Fig. 11, the authoring system 2 reads the conversion text string tTX. With Japanese syntax information (at step S2) and dictionary information (at step S3), the authoring system 2 converts the conversion text string tTX into a Japanese phrase (at step S4). Dictionary information that is referenced is for example a pronunciation symbol dictionary, a phoneme dictionary, and so forth.

In the Japanese phrase converting process, the authoring system 2 generates information as a pronunciation symbol string (at step S5). The authoring system 2 generates information of intonation (rhythm)/accent (at step S6). Moreover, the authoring system 2 generates audio volume data (at step S7).

In addition, the authoring system 2 categorizes the information of the pronunciation symbol string as a vowel, a consonant, and a voiceless sound (at steps S8, S9, and S10).

The authoring system 2 processes the information of vowel, consonant, and voiceless sound, intonation/accent data, and audio volume data with an intermediate language conversion table (at step S11).

In addition to pronunciation symbol information obtained from information of vowel, consonant, and voiceless sound, when one or both of intonation/accent data and audio volume data is added, since delimitation information of the data string of intonation/accent data and audio volume data is added, when necessary, the authoring system 2 generates the delimitation information sp12 and sp13 (at step S15).

When the operator designates a control command with a command value, the authoring system 2 generates the control command with the command value (at step S14). At this point, as information that delimits a control command section and information that delimits each command in the control command section, the authoring system 2 generates the delimitation information sp14 and sp15 (at step S15).

The authoring system 2 performs a combining process for the information converted with the intermediate language conversion table, the generated delimitation information, and the generated control command (at step S12). Thus, the authoring system 2 generates information as the intermediate language information mT (at step S13).

The intermediate language information mT generated at step F105 (the process shown in Fig. 11) is supplied to the transmission information generating portion 25. Along with the conversion text string tTX, the transmission information generating portion 25 performs a process for generating transmission information SD (the process at step F106 shown in Fig. 3).

At step F106, the authoring system 2 combines the intermediate language information mT and the conversion text string tTX as a data string in such a manner that the intermediate language information mT and the conversion text string tTX are delimited with delimitation information (sp11 and null code). In other words, the authoring system 2 generates one block of the transmission information SD.

Thereafter, the authoring system 2 performs the same processes as above-described first operation example shown in Fig. 3.

Next, examples of formats of transmission information SD generated in the second operation example will be described. Examples of formats of transmission information SD are shown in Figs. 12A to 12E and 20A to 20F. Figs. 12A to 12E show examples of formats that do not have control commands, whereas Figs. 20A to 20F show examples of formats that have control commands.

With reference to Figs. 12A to 19, examples of formats of read-out information that do not have control commands and examples of formats of read-out information that have control commands will be described.

Fig. 12A shows one string of transmission information SD. As with the first operation example as shown in Fig. 5E, a plurality of blocks (BR1 to BR(n)) are placed between a header and an end mark ED.

However, delimitation information and contents of each block in the second operation example are different from those in the first operation example.

As shown in Figs. 12A to 12E, text information tTX and intermediate language information mT are placed in each block as with the format shown in Fig. 5E. However, as delimitation information, a null code is placed at the beginning of each block. The null code is followed by the text information tTX.

The text information tTX is followed by the delimitation information sp11 and the intermediate language information mT. The intermediate language information mT is followed by the delimitation information sp11. In other words, the last delimitation information sp11 is followed by the null code that is placed at the beginning of the next block.

Thus, text information tTX and intermediate language information mT are placed in one block. The text information tTX and the intermediate language information mT are delimited with the delimitation information sp11 and the null code.

Figs. 12B to 12E show a variety of formats of intermediate language information mT.

In Fig. 12B, intermediate language information mT is composed of only one section SC of a pronunciation symbol string.

In other words, intermediate language information mT is generated without processes at steps S6, S7, S14, and S15 shown in Fig. 11.

In Fig. 12C, intermediate language information mT is composed of two sections SC of a pronunciation symbol string and intonation/accent data. The delimitation information sp12 is placed between the pronunciation symbol string and intonation/accent data. In this case, only processes at steps S7 and S14 shown in Fig. 11 are not executed.

In Fig. 12D, intermediate language information mT is composed of three sections SC of a pronunciation symbol string, intonation/accent data, and audio volume data. The delimitation information sp12 is placed at two positions. In this case, only a process at step S14 shown in Fig. 11 is not executed.

In Fig. 12E, intermediate language information mT is composed of two sections SC of a pronunciation symbol string and audio volume data. However, in this example, information that can be placed as read-out information to the transmission information SD is three sections SC that are a pronunciation symbol string, intonation/accent data, and audio volume data. In this example, three sections of a pronunciation symbol string, intonation/accent data, and audio volume data are placed to the intermediate language information mT in the order thereof. This is because the separating process of the reproducing terminal unit 7 can be simplified.

When intermediate language information mT is composed of a pronunciation symbol string and audio volume data, the order of sections is not secured (in other words, a section of audio volume data is not followed by a section of intonation/accent data). Thus, a particular means that represents an irregular state is required.

In this example, when intonation/accent data is omitted and thereby a pronunciation symbol string is followed by audio volume data, two sections of pronunciation symbol string and audio volume data are delimited with the delimitation information sp13 so as to represent the irregular order on the intermediate information mT.

Fig. 12E shows an example of a format of which processes at steps S6 and S14 shown in Fig. 11 are not executed.

As is clear from the above-described examples, intermediate language information mT which contain pronunciation symbol information contains at least pronunciation symbol information. In addition, intermediate language information mT may contain intonation/accent data and audio volume data.

With intonation/accent data and audio volume data, the reproducing terminal unit 7 can synthesize a voice in high quality.

In a language of which audio volume does not largely vary as with Japanese, when audio volume data is omitted, the data amount of intermediate language information mT can be decreased with a voice synthesized output in high quality.

When a control command is not placed, such formats are available. Next, examples of delimitation of each block BR and examples of information elements of read-out information will be described.

These examples apply to the case of which a control command is placed (this case will be described later).

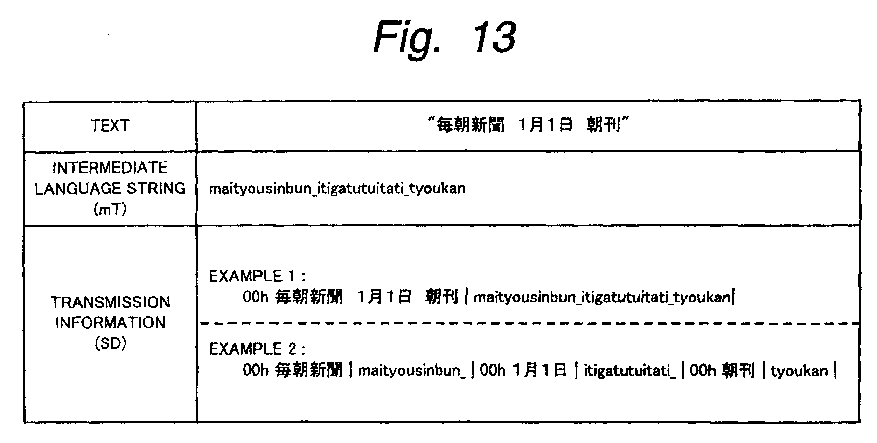

Next, with reference to Fig. 13, an arrangement of text information (conversion text string tTX) and intermediate language information mT in the format shown in Fig. 12B will be described.

As shown in Fig. 13, it is assumed that text information TX supplied to the intermediate language generating portion 24 is " 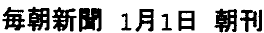 ".

In this case, when a conversion text string tTX formed at steps F101 to F104 is " 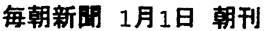 ", transmission information SD is formed as example 1 shown in Fig. 13 (in example 1, a header and an end mark are omitted).

In example 1, corresponding to the text information TX " 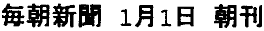 ", transmission information SD as one block is formed. As shown in Fig. 11, the block is composed of null code "00h", conversion text string tTX " 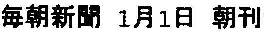 ", delimitation information sp11 "|", intermediate language information mT "maityousinbun itigatutuitati tyoukan", and delimitation information sp11 "|".

In example 2, corresponding to text information TX " 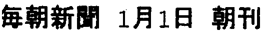 ", transmission information SD is formed as three blocks. In other words, as shown in Fig. 13, a first block of null code "00h", conversion text string tTX " 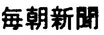 ", delimitation information sp11 "|", intermediate language information mT "maityousinbun", and delimitation information sp11 "|" and a second block of null code "00h", conversion text string tTX " 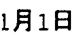 ", delimitation information sp11 "|", intermediate language information mT "itigatutuitati", and delimitation information sp11 "|" are formed.

As are clear from examples 1 and 2, delimitation of blocks for original text information TX can be freely set. For example, the delimitation can be set corresponding to an operator's operation. In other words, blocks are delimited at steps F102 and F103 shown in Fig. 3 (corresponding to text delimitation parameters).

As is clear from the reproducing process of the reproducing terminal unit 7 in the first operation example, text information and intermediate language information mT of one block are synchronously reproduced. Thus, since delimitation of blocks can be freely set, the reproducing operation can be flexibly set corresponding to the contents of the text information (text displaying process and the voice process corresponding to intermediate language information are synchronously performed in the reproducing terminal unit 7).

In the case of information such as a newspaper or a magazine, one block may be formed of a long text string. In the case of information such as an English conversation material, one block may be formed of a short text string. Thus, the reproducing terminal unit 7 can perform a synchronizing process corresponding to the contents of a text to be reproduced.

Next, a practical data example of each information of element of read-out information as intermediate language information mT will be described.

In this example, as read-out information, pronunciation symbol information, intonation/accent data, and audio volume data are considered.

With respect to pronunciation symbol information, pronunciation symbols are normally denoted in Roman characters.

Fig. 14 shows an example of notation of pronunciation symbols for text information in Japanese. Fig. 15 shows an example of notation of pronunciation symbols for text information in British English/American English. In Figs. 14 and 15, characters for real pronunciation sounds (left side) correlate with characters for pronunciation symbols (right side).

Pronunciation symbol information that is analyzed at steps S5, S8, S9, and S10 in Fig. 11 (and Fig. 4) and converted at step S11 is generated corresponding to an example of notation shown in Fig. 14 (in Japanese) or an example of notation shown in Fig. 15 (in British English/American English).

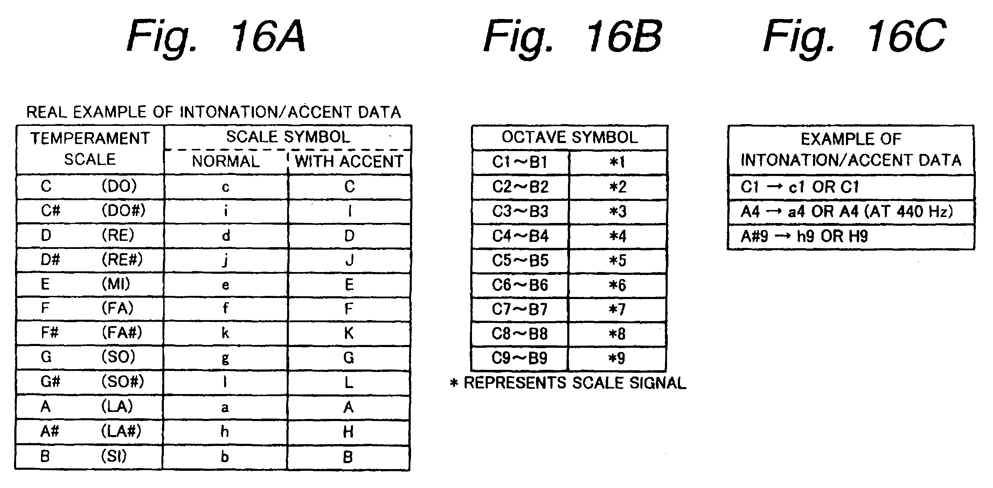

Figs. 16A to 16C show examples of intonation/accent data.

In other words, intonation is represented with temperament scales at A = 440 Hz that just corresponds to pronunciation symbols.

As shown in Fig. 16A, lower case alphabetic characters are assigned as scale symbols corresponding to temperament scales (C, C#, ... B). In other words, scale symbols "c, d, e, f, g, a, b" are assigned to temperament scales "C, D, E, F, G, A, B", respectively. In addition, scale symbols "i, j, k, l, k" are assigned to temperament scales "C#, D#, F#, G#, A#", respectively.

With respect to accent, scale symbols "a, b, c, d, e, f, g, h, i, j, k, l" are represented by scale symbols "A, B, C, D, E, F, G, H, I, J, K, L" of upper case alphabetic characters, respectively.

In temperament scales, an octave is represented with a number along with a scale name (C, C#, ... B). An octave as intonation/accent data is represented by a similar number as shown in Fig. 16B.

Thus, as shown in Fig. 16C, temperament scale C1 is denoted by "c1". Temperament scale C1 with an accent is denoted by "C1". Likewise, temperament scale A4 is denoted by "a4" or "A4". Temperament scale A#9 is denoted by "h9" or "H9".

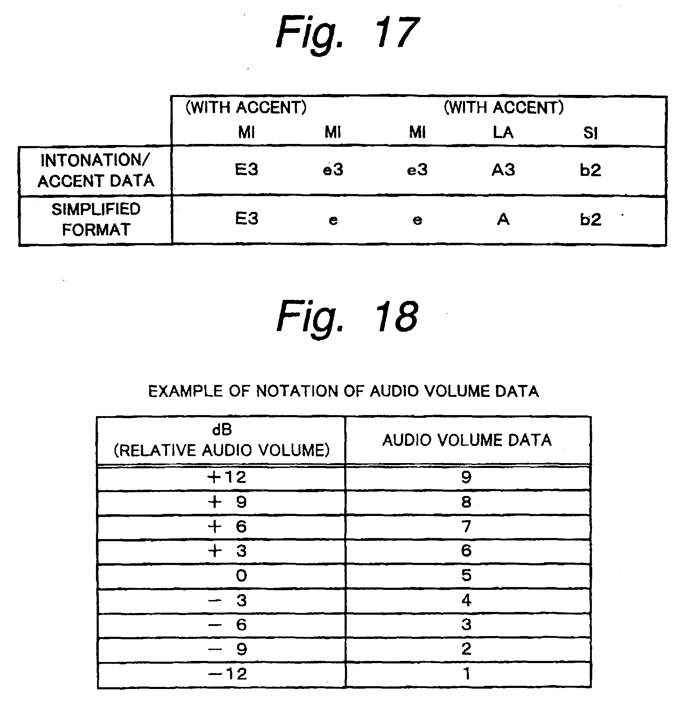

Since intonation/accent data just corresponds to pronunciation symbol information, when a five-tone text is pronounced as "MI, MI, MI, LA, SI" (E3, E3, E3, A3, B2 in scale names) and the first tone and the fourth tone are accented, intonation/accent data is represented as "E3, e3, e3, A3, b2" as shown in Fig. 17.

However, in this example, when the same numbers succeed as an octave symbol, the octave number of the second or later symbols is omitted so as to decrease the data amount. In this case, the intonation/accent data is represented as "E3, e, e, A, b2".

Fig. 18 shows an example of notation of audio volume data.

Audio volume data is information that represents a variation of an audio volume corresponding to a master volume of the reproducing terminal unit 7.

As shown in Fig. 18, audio volume data has data values ranging from "1" to "9". Data value "5" represents that relative audio volume is 0 in dB. In other words, the data values of the audio volume data represent a variation of the audio volume of the master volume of the reproducing terminal unit 7.

The data values "1" to "4" and "6" to "9" represent relative audio volume in dB as shown in Fig. 18. For example, the data value "3" of the audio volume data represents an audio volume that is lower by -6 dB than the audio volume of the master volume of the reproducing terminal unit 7.

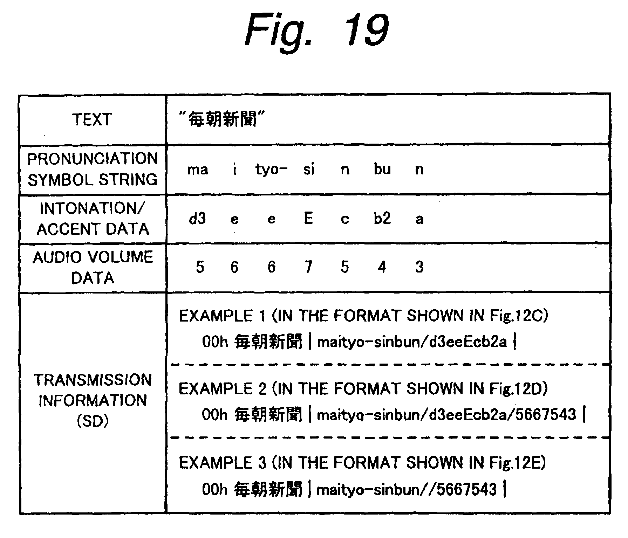

Fig. 19 shows an example of transmission information SD in the case that pronunciation symbol information, intonation/accent data, audio volume data, and so forth are placed in intermediate language information mT.

In this example, transmission information SD generated corresponding to a text " 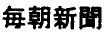 " is shown (a header and an end mark are omitted).

As shown in Fig. 19, pronunciation symbol information corresponding to the text " 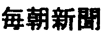 " is for example "maityo-sinbun"; intonation/accent data corresponding thereto is "d3 e e E c b2 a"; and audio volume data corresponding thereto is "5 6 6 7 5 4 3".

Thus, in the format of Fig. 12C, as shown in example 1 of Fig. 19, transmission information SD is composed of a data string of null code "00h", conversion text string tTX " 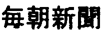 ", delimitation information sp11 "|", pronunciation symbol information "maityo-sinbun" of intermediate language information mT, delimitation information sp12 "/", intonation/accent data "d3 e e E c b 2a" of intermediate language information mT, and delimitation information sp11 "|".

In the format of Fig. 12D, as shown in example 2 of Fig. 19, transmission information SD is composed of a data string of null code "00h", conversion text string tTX " 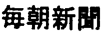 ", delimitation information sp11 "|", pronunciation symbol information "maityo-shinbun" of intermediate language information mT, delimitation information sp12 "/", intonation/accent data "d3 e e E c b2 a" of intermediate language information mT, delimitation information sp12 "/", audio volume data "5 6 6 7 5 4 3" of intermediate language information mT, and delimitation information sp11 "/".

In the format of Fig. 12E, as shown in example 3 of Fig. 19, transmission information SD is composed of a data string of null code "00h", conversion text string tTX " 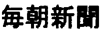 ", delimitation information sp11 "|", pronunciation symbol information "maityo-sinbun" of intermediate language information mT, delimitation information sp13 "//", audio volume data "5 6 6 7 5 4 3" of intermediate language information mT, and delimitation information sp11 "|".

Next, with reference to Fig. 20, examples of formats of transmission information SD in the case that control commands as command information are added to intermediate language information mT will be described. As with the example shown in Fig. 12A, Fig. 20A shows all information elements of one string of transmission information SD.

Figs. 20B, 20C, 20D, and 20E show examples of formats of which control commands are added to the formats shown in Figs. 12B, 12C, 12D, and 12E. In other words, since delimitation information for delimiting text information tTX and intermediate language information mT, arrangement of each section SC of read-out information in intermediate language information mT, and delimitation information for delimiting sections SC in the formats shown in Figs. 20B, 20C, 20D, and 20E are the same as those shown in Figs. 12B, 12C, 12D, and 12E, their description will be omitted for simplicity.

As are clear from Figs. 20B, 20C, 20D, and 20E, a section SC as a control command CC is placed at the beginning of intermediate language information mT. In addition, delimitation information sp14 is placed before and after the section SC of the control command so as to delimit each section SC.

In other words, the text information tTX is followed by the delimitation information sp11. The delimitation information sp11 is followed by the delimitation information sp14. The delimitation information sp14 is followed by the control command section, by the delimitation information sp14.

At least one command can be placed in the section SC as the control command CC. Fig. 20F shows an example of which three commands are placed.

As is clear from Fig. 20F, when a plurality of commands are placed, they are delimited with delimitation information sp15.

In this example, as commands that can be placed in the section SC of the control command CC, there are three commands that are s-command, t-command, and v-command.

These commands are valid in the current block (in other words, until the next null code or the next-command is placed).

Next, the functions of these commands will be described.

The s-command (speed command) serves to set an output speed (read-out speed) of voice synthesized output of the reproducing terminal unit 7.

The s-command has command values "s1" to "s9" as shown in Fig. 21. The command value "s5" represents a standard speed. The command values "s1" to "s4" and "s6" to "s9" represent read-out speeds in levels as shown in Fig. 21.

The t-command (tone command) serves to set a fundamental frequency for a tone (scale) of a voice synthesized output of the reproducing terminal unit 7.

The t-command has command values "t1" to "t9" as shown in Fig. 22A. The command value "t5" represents a fundamental interval. The fundamental interval is A4 (tone of "LA" of fourth lower octave) = 440 Hz.

The command values "t1" to "t4" and "t6" to "t9" represent variations from the fundamental interval as shown in Fig. 22A.

When the command value is "t1", the fundamental interval is decreased by three major degrees.

In the case that the command value of the t-command is "t5" that is the fundamental interval, when the value of the intonation/accent data is "a4", the temperament scale of the tone is A4 ("LA" in the fourth octave). However, when the command value of the t-command is "t1", the temperament scale of the tone at "a4" of intonation/accent data is decreased by three major degrees. Thus, the tone of F4 ("FA" in the fourth octave) is generated.

In other words, the variation of the pitch for each tone of the pronunciation symbol data is set corresponding to the intonation/accent data. However, with the t-command, the entire intervals can be shifted while the variation of the particular interval is being kept.

Fig. 22B shows examples of generated scales.

In the case that the intonation/accent data is "E3, e, e, A, b2" as shown in Fig. 17, when t-command = "t5" (standard), the scales of the generated tones are "E3, E3, E3, A3, B2" as shown in Fig. 22B.

When t-command = "t7", since the fundamental scale is increased by major two major degrees, the scales of the generated tones are "F#3, F#3, F#3, B3, C#3". When t-command = "t1", since the fundamental interval is decreased by major three degrees, the scales of the generated tones are "C3, C3, C3, F3, G2".

The v-command (volume command) servers to set the fundamental audio volume of the voice synthesized output of the reproducing terminal unit 7.

As shown in Fig. 23, the v-command has command values v1" to "v9". The command value "v5" represents the fundamental audio volume (the variation amount from the fundamental audio volume is 0).

The command values "v1" to "v4" and "v6" to "v9" represent variations from the fundamental audio volume as shown in Fig. 23.

When the command value is "v1", the variation of audio volume from the fundamental audio volume is - 40 %.

In other words, with the v-command, the entire audio volume of the pronunciation symbol string can be shifted while the variation of the audio volume of a particular tone thereof is being kept.

With the s-command, the t-command, and the v-command, read-out speed, interval, and audio volume of a particular block or a plurality of blocks can be variably set.

With the s-command, a block can be slowly or quickly read out corresponding to a command value thereof.

With the t-command, tones (intervals) of phrases of a conversation can be shifted. Thus, a voice synthesized output of which a male speaker and a female speaker converse with each other can be obtained.

With the v-command, audio volumes of phrases of conversation sentences can be shifted. Thus, a voice synthesized output with perspectives of a plurality of speakers can be accomplished.

The command values of each command and step width of each command value (10 % step in the s-command and the v-command and half tone interval in the t-command) are not limited to those shown in Figs. 21 to 23.

It should be noted that the types of commands are not limited to those described above.

Fig. 24 shows examples of formats of transmission information SD with such control commands. As with the formats shown in Fig. 19, Fig. 24 shows examples of formats of transmission information SD generated corresponding to a text " 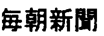 ". In these formats, the s-command "s7", t-command "t8", and v-command "v2" are considered as control commands.

In the format as shown in Fig. 20B, as shown in example 1 of Fig. 24, transmission information SD is composed of a data string of null code "00h", conversion text string tTX " 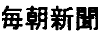 ", delimitation information sp11 "|", delimitation information sp14 ":", s-command "s7", delimitation information sp15 ",", t-command "t8", delimitation information sp15 ",", v-command "v2", delimitation information sp14 ":", pronunciation symbol information "maityo-sinbun" of intermediate language information mT, and delimitation information sp11 "|".

In the format as shown in Fig. 20C, as shown in example 2 of Fig. 24, transmission information SD is composed of a data string of null code "00h", conversion text string tTX " 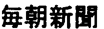 ", delimitation information sp11 "|", delimitation information sp14 ":", s-command "s7", delimitation information sp15 ",", t-command "t8", delimitation information sp15 ",", v-command "v2", delimitation information sp14 ":", pronunciation symbol information "maityo-sinbun" of intermediate language information mT, delimitation information sp12 "/", intonation/accent data "d3eeEcb2a" of intermediate language information mT, and delimitation information sp11 "|".

In the format as shown in Fig. 20D, as shown in example 3 of Fig. 24, transmission information SD is composed of a data string of null code "00h", conversion text string tTX " 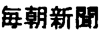 ", delimitation information sp11 "|", delimitation information sp14 ":", s-command "s7", delimitation information sp15 ",", t-command "t8", delimitation information sp15 ",", v-command "v2", delimitation information sp14 ":", pronunciation symbol information "maityo-sinbun" of intermediate language information mT, delimitation information sp12 "/", intonation/accent data "d3eeEcb2a" of intermediate language information mT, delimitation information sp12 "/", audio volume data "5667543" of intermediate language information mT, and delimitation information sp11 "|".

In the format as shown in Fig. 20E, as shown in example 4 of Fig. 24, transmission information SD is composed of a data string of null code "00h", conversion text string tTX " 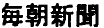 ", delimitation information sp11 "|", delimitation information sp14 ":", s-command "s7", delimitation information sp15 ",", t-command "t8", delimitation information sp15 ",", v-command "v2", delimitation information sp14 ":", pronunciation symbol information "maityo-sinbun" of intermediate language information mT, delimitation information sp13 "//", audio volume data "5667543" of intermediate language information mT, and delimitation information sp11 "|".

### 6. Process on terminal unit side corresponding to second operation example

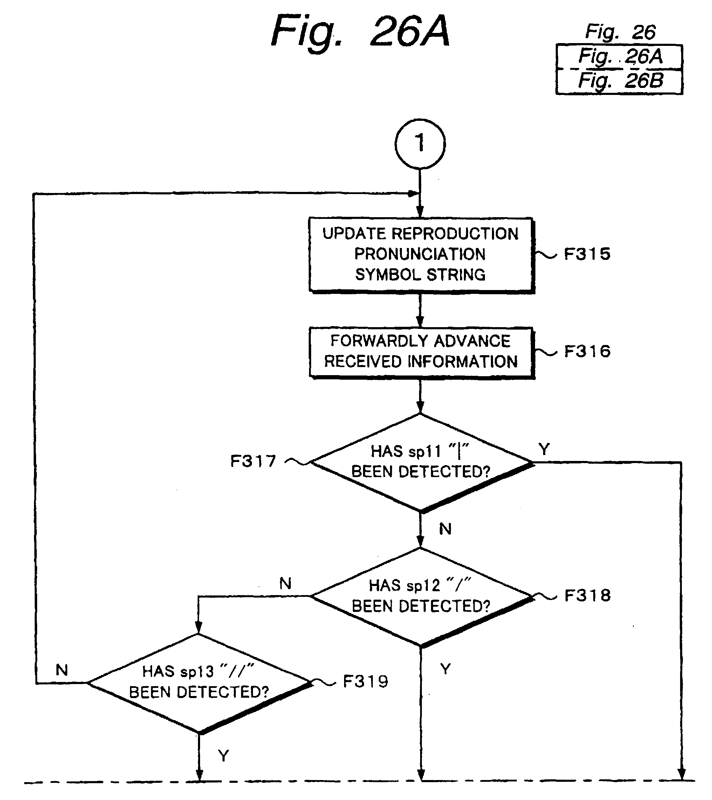

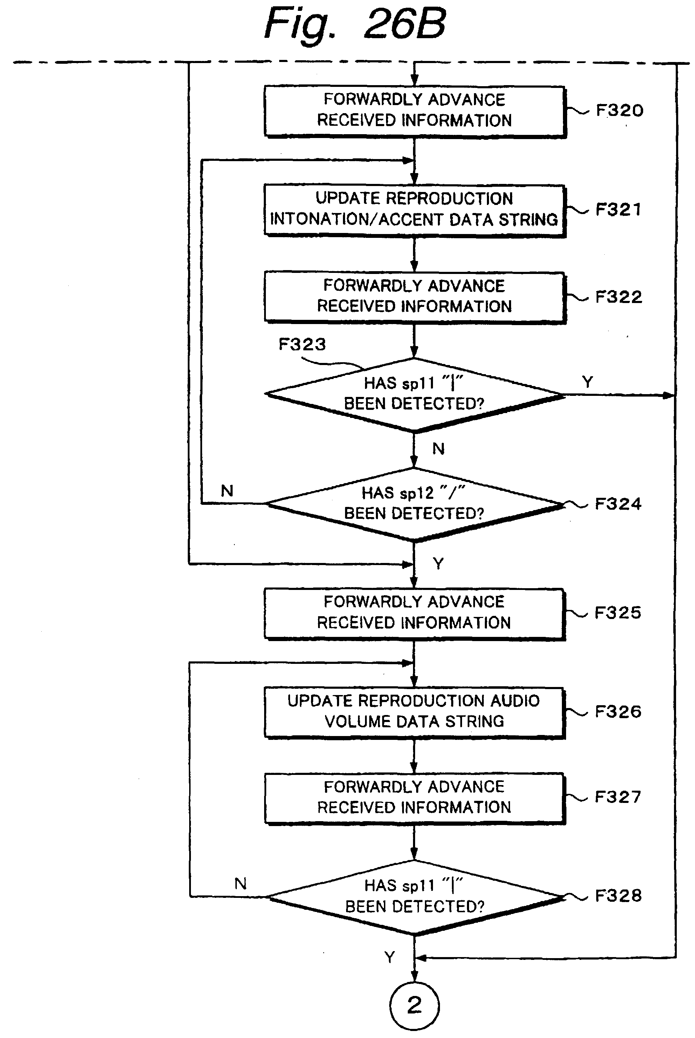

In the second operation example, transmission information SD is formed in the above-described manner. The formed transmission information SD is stored in the database 3. Next, with reference to flow charts shown in Figs. 26, 27, and 28, the reproducing process of the reproducing terminal unit 7 for the transmission information SD will be described.

The controller 75 of the reproducing terminal unit 7 receives transmission information SD through the terminal side transmitting/receiving unit 6.

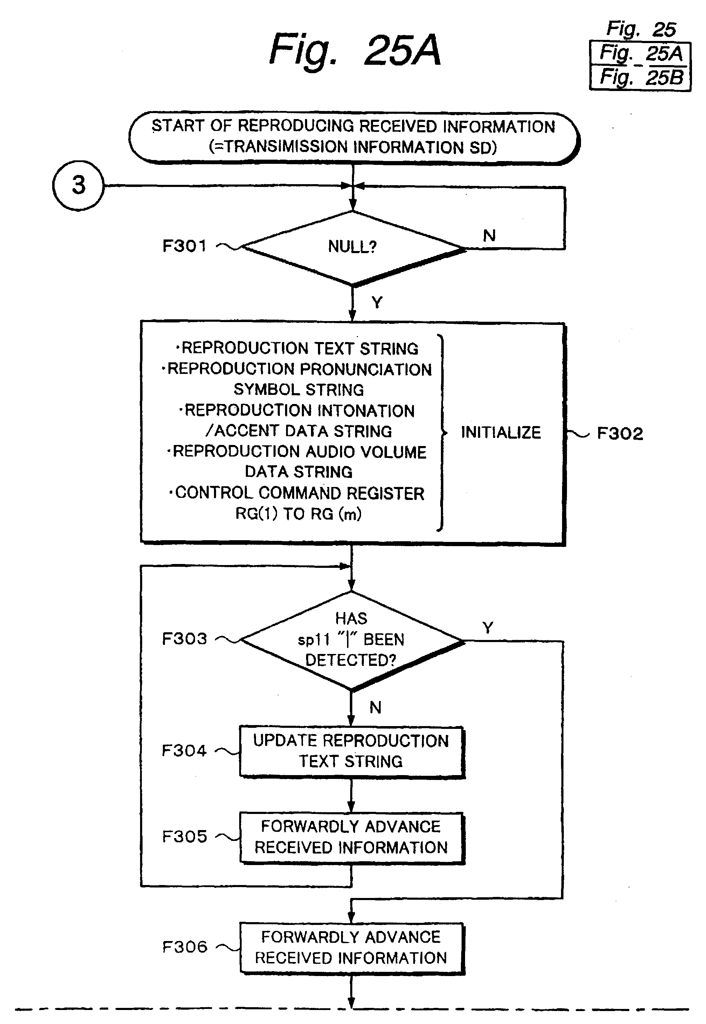

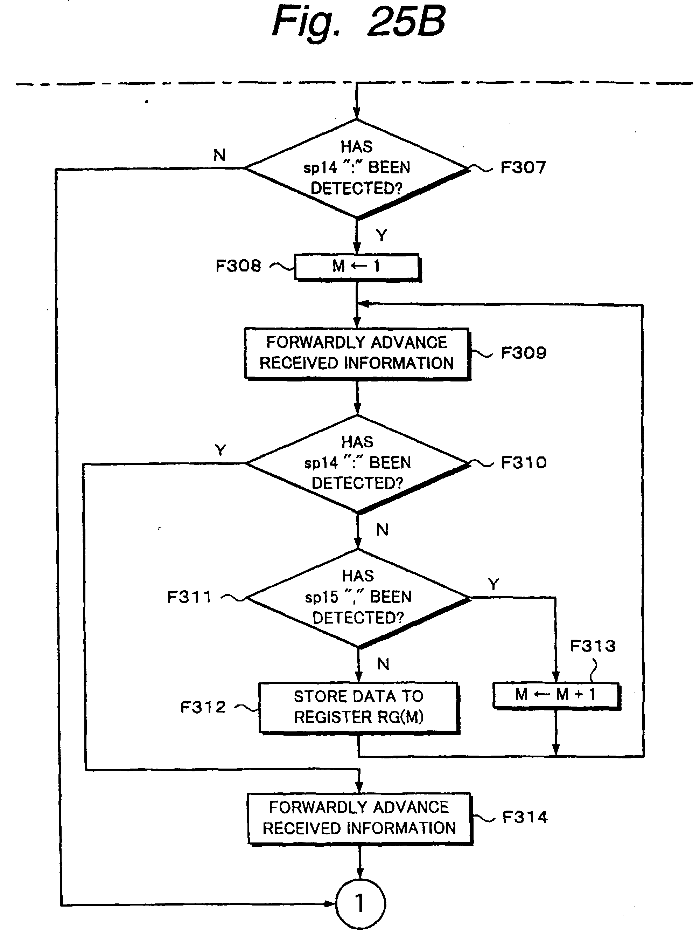

When the user issues a reproduction start-command for received information (= transmission information SD), the controller 75 performs processes starting from F301 shown in Figs. 25A and 25B.

At step F301, the controller 75 detects a null code at the beginning of one block of a data string as the transmission information SD. Before performing processes for the remaining data string (namely, real data of the block), the controller 75 performs an initializing process for processing for the real data of the block at step F302.

In this case, the controller 75 initializes registers RG(1) to RG(n) that store text information, pronunciation symbol information, intonation/accent data, audio volume data, and a control command that are data contained in the block. These registers or data elements stored therein are referred to as a reproduction text string, a reproduction pronunciation symbol string, a reproduction intonation/accent data string, a reproduction audio volume data string, and control command registers RG(1) to RG(n).

The initializing process at step F302 may be followed by the process at step F301.

Next, at steps F302, F304, F305, the controller 75 separates text data from the transmission information SD and generates a reproduction text string for reproducing text data (displaying a text).

In other words, the controller 75 successively analyzes data elements of the transmission information SD preceded by the null code and checks for delimitation information sp11. When the analyzed data element (character) is not the delimitation information sp11, the flow advances to step F304. At step F304, the controller 75 updates the reproduction text string so that the analyzed data element which is not delimitation information sp11 is added to the reproduction text string. At step F305, the controller 75 analyzes the next data element of the transmission information SD (hereinafter referred to as "forwardly advances the received information"). At step F303, the controller 75 determines whether or not the current data element is delimiter information sp11.

When the controller 75 has detected the delimiter information sp11 at a particular point, as is clear from the formats of the transmission information SD shown in Figs. 12A to 12E and 20A to 20F, text data (tTX) as one sentence is stored as a reproduction text string at the point.

At step F306, the controller 75 analyzes the next data element of the transmission information SD (namely, forwardly advances the received information). At step F307, the controller 75 determines whether or not the current data element is delimiter information sp14.

When the current data element is the delimitation information sp14, as shown in Fig. 20A to 20F, the current data element is followed by a control command CC.

When the current data element is the delimitation information sp14, the controller 75 performs an extracting process for the control command CC at step F307 to F313.

At step F308, the controller 75 sets variable M to "1". At step F309, the controller 75 forwardly advances the received information.

At steps F310 and F311, the controller 75 determines whether the current data element is the delimiter information sp14 or sp15. When the current data element is neither the delimitation information sp14, neither the delimitation information sp15, the controller 75 stores the data element to the register RG(M) at step F312.

When the current data element is the delimitation information sp15 at step F311, the controller 75 increments the variable M. Thereafter, the flow returns to step F309.

In the processes at steps F309 to F313, the controller 75 stores a data element as a control command to the control command register RG. These processes continue until the controller 75 detects the delimitation information sp14 at step F310 (up to the end of the control command section).

When three commands that are the s-command, the t-command, and the v-command delimited with the delimitation information sp14 are placed in a control command section delimited with the delimitation information sp15, the controller 75 stores the command values of these commands to the control command registers RG1, GR2, and RG3.

When one of the s-command, the t-command, and the v-command is placed in the control command section, the controller 75 stores the command value of the command to the control command register RG1.

When two of the s-command, the t-command, and the v-command are placed in the control command section, the controller 75 stores the command values of the commands to the control command register RG1 and RG2.

When the controller 75 has detected the delimitation information sp14 at step F310 and stored the control command, the controller 75 forwardly advances the received information. Thus, the flow advances to step F315 shown in Figs. 26A and 26B through a branch point (1) in Figs. 25A and 25B.

When the controller 75 has not detected the delimitation information sp14 at step F307 (namely, the transmission information SD does not contain a control command), the flow advances to step F315 shown in Figs. 26A and 26B through a branch point (1) shown in Figs. 25A and 25B.

At this point, since the current data element by advancing the received information is at the beginning of the pronunciation symbol information, the controller 75 performs a process for placing the data element to the reproduction pronunciation symbol string.

At step F316, the controller 75 forwardly advances the received information. At steps F317, F318, and F319, the controller 75 determines whether or not the current data element by advancing the received information is delimiter information sp11, delimiter information sp12, or delimiter information sp13.

When the current data element is neither the delimiter information sp11, the delimiter information sp12, nor the delimiter information sp13, since the current data element is data that composes pronunciation symbol information, the flow returns to step F315. At step F315, the controller 75 performs the updating process for adding the current data element to the reproduction symbol string.

When the controller 75 repeats the processes at steps F315 to F319, the controller 75 detects delimitation information at one of steps F315 to F319.

When the received information (transmission information SD) has the format shown in Fig. 12B or the format shown in Fig. 20B, the controller 75 detects the delimitation information sp11 at step F317 at a particular point.

When the received information (transmission information SD) has the format shown in Fig. 12C or 12D or the format shown in Fig. 20C or 20D, the controller 75 detects the delimitation information sp13 at step F319 at a particular point.

When the received information (transmission information SD) has the format shown in Fig. 12E or the format shown in Fig. 20E, the controller 75 detects the delimitation information sp13 at step F319 at a particular point.

When the controller 75 has detected the delimitation information sp12 at step F318, since the next data element is a section of intonation/accent data, the flow advances to step F320. At step F320, the controller 75 forwardly advances the received information. Thus, since the current data element is at begging of the intonation/accent data, the controller 75 performs a process for placing the current data element to the reproduction intonation/accent data strong at step F321.

The controller 75 forwardly advances the received information at step F322. At steps F323 and F324, the controller 75 determines whether or not the current data element is the delimitation information sp11 or the delimitation information sp12.

When the current data element is neither the delimitation information sp11 nor the delimitation information sp12, since the current data element is data that composes the intonation/accent data, the flow returns to step F321. At step F321, the controller 75 performs the updating process for adding the current data element to the reproduction intonation/accent data string.

After repeating the processes from steps F321 to F324, the controller 75 detects delimitation information at step F323 or step F324 at a particular point.

When the received information (transmission information SD) has the format shown in Fig. 12C or the format shown in Fig. 20C, the controller 75 detects the delimitation information sp11 at step F323 at a particular point.

When the received information (transmission information SD) has the format shown in Fig. 12D or the format shown in Fig. 20D, the controller 75 detects the delimitation information sp12 at step F324 at a particular point.

When the controller 75 has detected the delimitation information sp12 at step F324, since the next data element is a section of audio volume data, the flow advances to step F325. At step F325, the controller 75 forwardly advances the received information. When the controller 75 has detected the delimitation information sp13 at step F318, since the next data element is a section of audio volume data, the flow advances to step F325. At step F325, the controller 75 forwardly advances the received information.

When the controller 75 has forwardly advanced the received information, since the current data bock is at the beginning of the audio volume data, the flow advances to step F326. At step F326, the controller 75 performs the process for placing the current data element to the reproduction audio volume data string.

At step F327, the controller 75 forwardly advances the received information. At step F328, the controller 75 determines whether or not the current data element is the delimitation information sp11.

When the current data element is not the delimitation information sp11, since the current data element is data that composes the audio volume data, the flow returns to step F326. At step F326, the controller 75 performs the updating process for adding the current data element to the reproduction audio volume data string.

When the received information (transmission information SD) has the format shown in Fig. 12D or 12 E or the format shown in Fig. 20D or 20E, the flow advances to step F328. At step F328, the controller 75 detects the delimitation information sp11 at a particular point.

As described above, when the received information has the format shown in Fig. 12C or the format shown in Fig. 20C, the flow advances to step F323. At step F323, the controller 75 detects the delimitation information sp11 at a particular point. When the received information has the format shown in Fig. 12B or the format shown in Fig. 20B, the flow advances to step F317. At step F317, the controller 75 detects the delimitation information sp11 at a particular point.

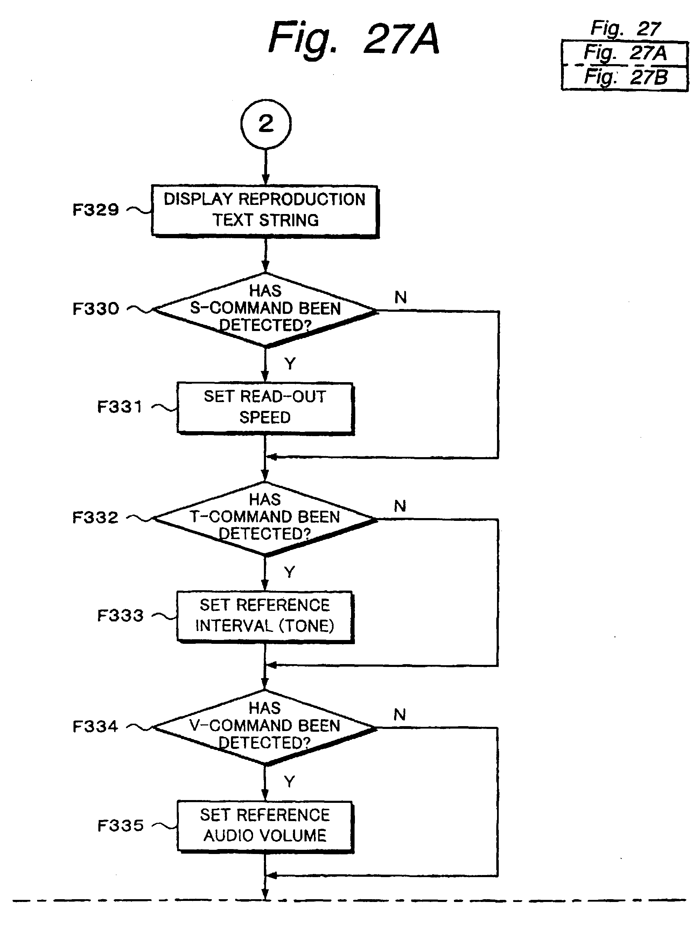

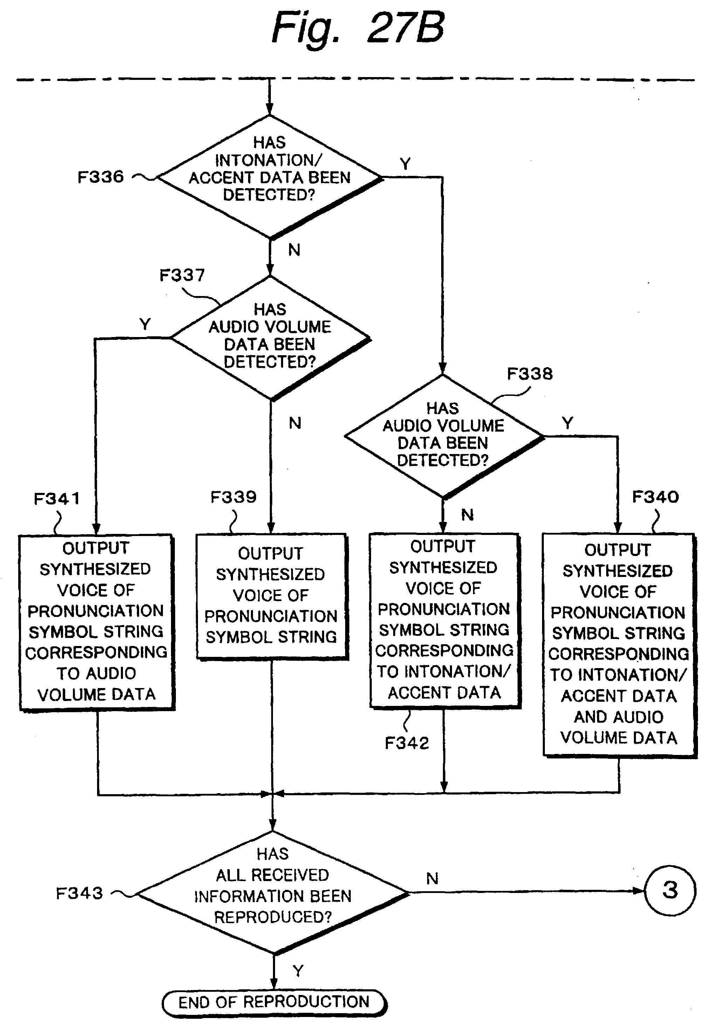

When the controller 75 has detected the delimitation information sp11, since the controller 75 has completely received one block of the transmission information SD, the flow advances to step F329 shown in Figs. 27A and 27B through a branch point (2) shown in Figs. 26A and 26B. In other words, the controller 75 performs the reproducing operation for data that is extracted from one block of the transmission information SD and stored to each register.

At step F329, the controller 75 supplies data stored as the reproduction text string to the displaying driver 79. The displaying driver 79 causes the displaying portion 81 to display the reproduction text string.

At steps F330, F332, and F334, the controller 75 checks for the contents of the control command register RG. When the control command register RG has stored the s-command, the controller F329 sets the read-out speed corresponding to the command value of the s-command at step F331.

When the control command register RG has stored the t-command, the controller 75 sets the fundamental interval (tone) corresponding to the command value of the t-command at step F333.

When the control command register RG has stored the v-command, the controller 75 sets the audio volume corresponding to the command value of the v-command at step F335.

At steps F336, F337, and F338, the controller 75 checks for the storing state of read-out information as the intermediate language information mT. In this embodiment, the intermediate language information mT contains pronunciation symbol information. However, the intermediate language information mT may not contain intonation/accent data and audio volume data.

Thus, at steps F336, F337, and F338, the controller 75 determines whether the reproduction intonation/accent data string and audio volume data string have been stored. Corresponding to the determined result, the flow branches.

When both intonation/accent data and audio volume data have not been stored (in other words, the received information has the format shown in Fig. 12B or the format shown in Fig. 20B), the flow advances to step F339. At step F339, the controller 75 performs the voice synthesizing process corresponding to the pronunciation symbol information stored as the reproduction pronunciation symbol string and generates a synthesized voice signal. The synthesized voice signal is supplied to the audio circuit 78. The controller 75 causes the audio circuit 78 to reproduce and output the synthesized voice signal as a voice through the voice outputting portion 80.

When intonation/accent data has been stored and audio volume data has not been stored (in other words, the received information has the format shown in Figs. 12C or the format shown in Fig. 20C), the flow advances to step F342. At step F342, the controller 75 performs the voice synthesizing process corresponding to the pronunciation symbol information stored as the reproduction pronunciation symbol string and the intonation/accent data stored as the reproduction intonation/accent data string and generates a synthesized voice signal. The synthesized voice signal generated is supplied to the audio circuit 78. The controller 75 causes the audio circuit 78 to reproduce and output the synthesized voice signal as a voice through the voice outputting portion 80.

When both intonation/accent data and audio volume data have been stored (in other words, the received information has the format shown in Fig. 12D or the format shown in Fig. 20D), the flow advances to step F340. At step F340, the controller 75 performs the voice synthesizing process corresponding to the pronunciation symbol information stored as the reproduction pronunciation symbol string, the intonation/accent data stored as the reproduction intonation/accent data string, and the audio volume data stored as the reproduction audio volume data string and generates a synthesized voice signal. The synthesized voice signal generated is supplied to the audio circuit 78. The controller 75 causes the audio circuit 78 to reproduce and output the synthesized voice signal as a voice through the voice outputting portion 80.

When intonation/accent data has not been stored and audio volume data has been stored (in other words, the received information has the format shown in Fig. 12E or the format shown in Fig. 20E), the flow advances to step F341. At step F341, the controller 75 performs the voice synthesizing process corresponding to the pronunciation symbol information stored as the reproduction pronunciation symbol string and the audio volume data stored as the reproduction audio volume data string and generates a synthesized voice signal. The synthesized voice signal generated is supplied to the audio circuit 78. The controller 75 causes the audio circuit 78 to reproduce and output the synthesized voice signal as a voice through the voice outputting portion 80.

When the block contains a control command (or a control command contained in the preceding block is still valid), even if a synthesized voice signal is output at step F339, F340, F341, or F342, the controller 75 performs a process corresponding to all or part of the s-command, the t-command, and the v-command.

In the above-described processes, one block (a sentence, a phrase, a word, or the like) of the received transmission information SD is output as a voice and an image.

Thus, when all data elements (namely, all blocks) of the received transmission information SD have not been reproduced (namely, an end mark ED has not been detected), the flow returns to step F301 in Figs. 25A and 25B as shown ③ in Fig. 23. The controller 75 repeats the above-described processes from step F301. In other words, the controller 75 reproduces and outputs a sentence, a phrase, or the like as the next block.

After having reproduced all blocks of the received transmission information, the controller 75 completes the reproducing process at step F343.

Thus, as with above-described first operation example, in the second operation example, original text data that has been circulated can be reproduced as a voice and an image.

In the second operation example, while text data and intermediate language information mT corresponding to the text data are being reproduced block by block, each block of transmission information SD is reproduced. Thus, an image and a voice are synchronously reproduced. Thus, the user can check for data on the display while listing to the voice corresponding to the data.

The controller 75 performs the voice synthesizing process corresponding to intermediate language information mT as read-out information and outputs a voice signal. Since the authoring system 2 has performed a text data analyzing process using a huge dictionary and syntax data, the controller 75 does not need to perform the text data analyzing process. Thus, since the load of the processes performed by the controller 75 is small, the scales of hardware and software for the controller 75 are small. Consequently, small-light structure, low cost, and low power consumption can be easily accomplished for the reproducing terminal unit 7.

In addition, since the controller 75 processes received transmission information SD block by block and separates text data tTX from intermediate language information mT for each block corresponding to delimitation information sp11 and null code, the separating process of the controller 75 becomes simple.

In this embodiment, a null code is placed at the beginning of each block. However, as described above, since delimitation information sp11 is placed after intermediate language information mT (at the end of each block), the delimitation of each block can be detected with the delimitation information sp11 after intermediate language information mT. In other words, a format of transmission information SD that does not contain a null code is available. In this case, at step F301 shown in Figs. 25A and 25B, the delimitation information sp11 is detected.

In this embodiment, each section of intermediate language information mT is separated/extracted corresponding to delimitation information sp12, sp13, and sp14. Thus, each section of intermediate language information mT can be easily separated/extracted. Each control command can be easily separated/extracted corresponding to delimitation information sp15. Thus, the load of processes performed by the reproducing terminal unit 7 can be reduced. Thus, the scales of hardware and software of the reproducing terminal unit 7 can be reduced.

In addition, since voice signal data that has not been compressed is transmitted, the quality of the signal data does not deteriorate. Moreover, since information such as intonation/accent data and audio volume data is added to transmission information SD, a voice can be reproduced and output in very high quality.

In addition, with control commands, a voice can be output in various manners.

Moreover, since the data amount of transmission information SD transmitted on the transmission path 5 is much smaller than the data amount of audio data, transmission of the transmission information SD does not necessitate long time. Thus, the user is provided with a comfortable information service.

Having described a specific preferred embodiment of the present invention with reference to the accompanying drawings, it is to be understood that the invention is not limited to that precise embodiment, and that various changes and modifications may be effected therein by one skilled in the art without departing from the scope or the spirit of the invention as defined in the appended claims.

In the above-described embodiment, it is assumed that the reproducing terminal unit 7 is a reproducing unit that is portable and small. However, since a general-purpose personal computer can sufficiently synthesize and output a voice, the system according to the present invention can be accomplished with application software that performs the processes shown in Fig. 9 (or Figs. 25 to 27).

In particular, a personal computer that has a sound function can synthesize a voice only with such software.

According to the present invention, text information and intermediate language information are combined and transmission information is generated. However, depending on a system structure, only intermediate language information according to the present invention may be provided as transmission information SD.

Text data as sub information of a video signal reproduced from a video record medium may be added. In this case, when intermediate language information corresponding to such text data is added and recorded to such a video record medium, a voice synthesized output can be obtained in high quality with a simple process of a reproducing unit. When the voice synthesized output is mixed with above-described voice signal reproduced along with a video signal, the voice synthesized output can be used as a voice such as narration.

When a voice element information table for synthesizing a voice is updated on the reproducing terminal side (reproducing terminal unit 7), the quality of a synthesized voice can be selected by the user. Thus, the voice quality can be improved corresponding to further requirements.

The user can freely select the tone of a voice and read-out speed.

## Claims

1. An information transmitting and receiving apparatus, comprising:
intermediate language information generating means for generating intermediate language information as read-out information corresponding to supplied text information;
transmission information generating means for combining at least the text information and the intermediate language information and generating transmission information;
transmitting means for transmitting the transmission information generated by said transmission information generating means;
receiving means for receiving the transmission information from said transmitting means;
signal processing means for separating the transmission information received by said receiving means into at least the text information and the intermediate language information and generating voice synthesized information corresponding to the separated intermediate language information;
displaying means for displaying the text information separated by said signal processing means; and
outputting means for outputting voice corresponding to the voice synthesized information generated by said signal processing means.

2. The information transmitting and receiving apparatus as set forth in claim 1, wherein said transmission information generating means generates the transmission information in such a manner that delimitation information that delimits the text information and the intermediate language information is added to the transmission information.

3. The information transmitting and receiving apparatus as set forth in claim 2, wherein said transmission information generating means generates the transmission information in such a manner that delimitation information that represents the end position of the intermediate language information is added to the transmission information.

4. The information transmitting and receiving apparatus as set forth in claim 2 or 3, wherein said transmission information generating means generates the transmission information in such a manner that a header is placed at the beginning of the transmission information and an end mark is placed at the end of the transmission information.

5. The information transmitting and receiving apparatus as set forth in any one of claims 1 to 4, wherein said intermediate language information generating means generates pronunciation symbol information corresponding to the supplied text information.

6. The information transmitting and receiving apparatus as set forth in claim 5, wherein said intermediate language information generating means generates at least one of intonation/accent information and audio volume information and combines the generated pronunciation symbol information and at least one of the intonation/accent information and the audio volume information so as to generate the intermediate language information.

7. The information transmitting and receiving apparatus as set forth in any one of claims 1 to 6, wherein said intermediate language information generating means generates pronunciation symbol information corresponding to the supplied text information and generates-command information for a voice process corresponding to the pronunciation symbol information.

8. The information transmitting and receiving apparatus as set forth in claim 7, wherein the command information includes at least one of voice speed information, reference interval information, and reference audio volume information, the voice speed information being used for the voice process corresponding to the pronunciation symbol information.

9. The information transmitting and receiving apparatus as set forth in claim 8, wherein said intermediate language information generating means generates delimitation information that represents delimitation of the command information.

10. The information transmitting and receiving apparatus as set forth in claim 9, wherein said intermediate language information generating means generates another delimitation information that delimits the intermediate language information as a piece of the read-out information.

11. The information transmitting and receiving apparatus as set forth in any one of claims 1 to 10, further comprising:
text information generating means for generating text information as each element thereof.

12. The information transmitting and receiving apparatus as set forth in claim 11, wherein said text information generating means detects a text data delimitation parameter so as to generate the text information as each element thereof.

13. The information transmitting and receiving apparatus as set forth in claim 12, wherein said signal processing means separates the text information and the intermediate language information corresponding to the delimitation information.

14. The information transmitting and receiving apparatus as set forth in any one of the preceding claims, wherein said intermediate language information generating means generates pronunciation symbol information corresponding to the supplied text information, and
wherein said signal processing means generates the voice synthesized information corresponding to at least the pronunciation symbol information.

15. The information transmitting and receiving apparatus as set forth in claim 14, wherein said intermediate language information generating means generates at least one of intonation/accent information and audio volume information, and
wherein said signal processing means generates the voice synthesized information corresponding to at least the pronunciation symbol information and at least one of the intonation/accent information and the audio volume information.

16. The information transmitting and receiving apparatus as set forth in claim 14 or 15, wherein said intermediate language information generating means generates-command information for a voice process corresponding to the pronunciation symbol information, and
wherein said signal processing means generates the voice synthesized information corresponding to the pronunciation symbol information and the command information.

17. The information transmitting and receiving apparatus as set forth in claim 16, wherein said intermediate language information generating means generates delimitation information that represents delimitation of the command information, and
wherein said signal processing means switches a generating operation for voice synthesized information corresponding to whether or not the delimitation information is present.

18. The information transmitting and receiving apparatus as set forth in any one of the preceding claims, wherein said transmission information generating means generates a plurality of types of delimitation information and adds the generated plurality of types of delimitation information to the text information and the intermediate language information so as to generate the transmission information, and
wherein said signal processing means determines whether or not the received transmission information is the plurality of types of delimitation information so as to separate the test information and the intermediate language information.

19. The information transmitting and receiving apparatus as set forth in claim 18, wherein the plurality of types of delimitation information are first delimitation information and second delimitation information, the first delimitation information delimiting at least the text information and the intermediate language information, the second delimitation information delimiting the intermediate language information as a piece of the read-out information.

20. The information transmitting and receiving apparatus as set forth in claim 19, wherein said intermediate language information generating means generates pronunciation symbol information corresponding to the supplied text information and generates-command information for a voice process corresponding to the pronunciation symbol information, the plurality of types of delimitation information including delimitation information that represents delimitation of the command information.

21. An information transmitting apparatus, comprising:
intermediate language information generating means for generating intermediate language information in such a manner that supplied text information is read-out information corresponding to the supplied text information;
transmission information generating means for combining at least the text information and the intermediate language information so as to generate transmission information; and
transmitting means for transmitting the transmission information generated by said transmission information generating means.

22. The information transmitting apparatus as set forth in claim 21, wherein said transmission information generating means generates the transmission information in such a manner that delimitation information that delimits the text information and the intermediate language information is added to the transmission information.

23. The information transmitting apparatus as set forth in claim 22, wherein said transmission information generating means generates the transmission information in such a manner that delimitation information that represents the end position of the intermediate language information is added to the transmission information.

24. The information transmitting apparatus as set forth in claim 23, wherein said transmission information generating means generates the transmission information in such a manner that a header is placed at the beginning of the transmission information and an end mark is placed at the end of the transmission information.

25. The information transmitting apparatus as set forth in any one of claims 21 to 24, wherein said intermediate language information generating means generates pronunciation symbol information corresponding to the supplied text information.

26. The information transmitting apparatus as set forth in claim 25, wherein said intermediate language information generating means generates at least one of intonation/accent information and audio volume information and combines the generated pronunciation symbol information and at least one of the intonation/accent information and the audio volume information so as to generate the intermediate language information.

27. The information transmitting apparatus as set forth in any one of claims 21 to 26, wherein said intermediate language information generating means generates pronunciation symbol information corresponding to the supplied text information and generates-command information for a voice process corresponding to the pronunciation symbol information.

28. The information transmitting apparatus as set forth in claim 27, wherein the command information includes at least one of voice speed information, reference interval information, and reference audio volume information, the voice speed information being used for the voice process corresponding to the pronunciation symbol information.

29. The information transmitting apparatus as set forth in claim 28, wherein said intermediate language information generating means generates delimitation information that represents delimitation of the command information.

30. The information transmitting apparatus as set forth in claim 29, wherein said intermediate language information generating means generates another delimitation information that delimits the intermediate language information as a piece of the read-out information.

31. The information transmitting apparatus as set forth in any one of claims 21 to 30, further comprising:
text information generating means for generating text information as each element thereof.

32. The information transmitting apparatus as set forth in claim 31, wherein said text information generating means detects a text data delimitation parameter so as to generate the text information as each element thereof.

33. An information receiving apparatus for receiving transmission information including at least text information and intermediate language information, comprising:
receiving means for receiving the transmission information;
signal processing means for separating the transmission information received by said receiving means into at least the text information and the intermediate language information and generating voice synthesized information corresponding to the separated intermediate language information;
displaying means for displaying the text information separated by said signal processing means; and
outputting means for outputting voice corresponding to the voice synthesized information generated by said signal processing means.

34. The information receiving apparatus as set forth in claim 33, wherein the transmission information includes delimitation information that delimits the text information and the intermediate language information, and
wherein said signal processing means separates the text information and the intermediate language information corresponding to the delimitation information.

35. The information receiving apparatus as set forth in claim 33 or 34, wherein the intermediate language information includes pronunciation symbol information generated corresponding to the text information, and
wherein said signal processing means generates the voice synthesized information corresponding to at least the pronunciation symbol information.

36. The information receiving apparatus as set forth in claim 35, wherein the intermediate language information includes at least one of intonation/accent information and audio volume information, and
wherein said signal processing means generates the voice synthesized information corresponding to at least the pronunciation symbol information and at least one of the intonation/accent information and the audio volume information.

37. The information receiving apparatus as set forth in claim 36, wherein the intermediate language information includes command information for a voice process corresponding to the pronunciation symbol information, and
wherein said signal processing means generates the voice synthesized information corresponding to the pronunciation symbol information and the command information.

38. The information receiving apparatus as set forth in claim 37, wherein said intermediate language information includes delimitation information that represents delimitation of the command information, and
wherein said signal processing means switches a generating operation for voice synthesized information corresponding to whether or not the delimitation information is present.

39. An information transmitting and receiving method, comprising the steps of:
(a) generating intermediate language information as read-out information corresponding to supplied text information;
(b) combining at least the intermediate language information generated at the step A and the supplied text information and generating transmission information;
(c) transmitting the transmission information generated at the step (b);
(d) receiving the transmission information transmitted at the step (c);
(e) separating the transmission information received at the step (d) into at least the text information and the intermediate language information;
(f) displaying the text information separated at the step (e); and
(g) generating and outputting voice synthesized information corresponding to the intermediate language information separated at the step (e).

40. The information transmitting and receiving method as set forth in claim 39, wherein the step (b) is performed by generating the transmission information in such a manner that delimitation information that delimits the text information and the intermediate language information is added to the transmission information.

41. The information transmitting and receiving method as set forth in claim 40, wherein the step (b) is performed by generating the transmission information in such a manner that delimitation information that represents the end position of the intermediate language information is added to the transmission information.

42. The information transmitting and receiving method as set forth in claim 41, wherein the step (b) is performed by generating the transmission information in such a manner that a header is placed at the beginning of the transmission information and an end mark is placed at the end of the transmission information.

43. The information transmitting and receiving method as set forth in any one of claims 39 to 42, wherein the step (a) is performed by generating pronunciation symbol information corresponding to the supplied text information.

44. The information transmitting and receiving method as set forth in claim 43, wherein the step (a) is performed by generating at least one of intonation/accent information and audio volume information and combining the generated pronunciation symbol information and at least one of the intonation/accent information and the audio volume information so as to generate the intermediate language information.

45. The information transmitting and receiving method as set forth in any one of claims 39 to 44, wherein the step (a) is performed by generating pronunciation symbol information corresponding to the supplied text information and generating command information for a voice process corresponding to the pronunciation symbol information.

46. The information transmitting and receiving method as set forth in claim 45, wherein the command information includes at least one of voice speed information, reference interval information, and reference audio volume information, the voice speed information being used for the voice process corresponding to the pronunciation symbol information.

47. The information transmitting and receiving method as set forth in claim 46, wherein the step (a) is performed by generating delimitation information that represents delimitation of the command information.

48. The information transmitting and receiving method as set forth in claim 47, wherein the step (a) is performed by generating another delimitation information that delimits the intermediate language information as a piece of the read-out information.

49. The information transmitting and receiving method as set forth in any one of claims 39 to 48, further comprising the step of:
(h) generating text information as each element thereof.

50. The information transmitting and receiving method as set forth in claim 49, wherein the step (h) is performed by detecting a text data delimitation parameter so as to generate the text information as each element thereof.

51. The information transmitting and receiving method as set forth in any one of claims 39 to 50, wherein the step (e) is performed by separating the text information and the intermediate language information corresponding to the delimitation information.

52. The information transmitting and receiving method as set forth in claim 51, wherein the step (a) is performed by generating pronunciation symbol information corresponding to the supplied text information, and
wherein the step (g) is performed by generating the voice synthesized information corresponding to at least the pronunciation symbol information.

53. The information transmitting and receiving method as set forth in claim 52, wherein the step (a) is performed by generating at least one of intonation/accent information and audio volume information, and
wherein the step (g) is performed by generating the voice synthesized information corresponding to at least the pronunciation symbol information and at least one of the intonation/accent information and the audio volume information.

54. The information transmitting and receiving method as set forth in claim 52 or 53, wherein the step (a) is performed by generating command information for a voice process corresponding to the pronunciation symbol information, and
wherein the step (g) is performed by generating the voice synthesized information corresponding to the pronunciation symbol information and the command information.

55. The information transmitting and receiving method as set forth in claim 54, wherein the step (a) is performed by generating delimitation information that represents delimitation of the command information, and
wherein the step (g) is performed by switching a generating operation for voice synthesized information corresponding to whether or not the delimitation information is present.

56. The information transmitting and receiving method as set forth in any one of claims 39 to 55, wherein the step (b) is performed by generating a plurality of types of delimitation information and adding the generated plurality of types of delimitation information to the text information and the intermediate language information so as to generate the transmission information, and
wherein the step (e) is performed by determining whether or not the received transmission information is the plurality of types of delimitation information so as to separate the test information and the intermediate language information.

57. The information transmitting and receiving method as set forth in claim 56, wherein the plurality of types of delimitation information are first delimitation information and second delimitation information, the first delimitation information delimiting at least the text information and the intermediate language information, the second delimitation information delimiting the intermediate language information as a piece of the read-out information.

58. The information transmitting and receiving method as set forth in claim 57, wherein the step (a) is performed by generating pronunciation symbol information corresponding to the supplied text information and generating command information for a voice process corresponding to the pronunciation symbol information, the plurality of types of delimitation information including delimitation information that represents delimitation of the command information.
